(19) Europäisches Patentamt
European Patent Office
Office européen des brevets

(11) **EP 2 650 754 A2**

(12) **EUROPEAN PATENT APPLICATION**

(43) Date of publication:
**16.10.2013 Bulletin 2013/42**

(51) Int Cl.:
*G06F 3/01* (2006.01)          *G06F 3/03* (2006.01)

(21) Application number: **13151598.3**

(22) Date of filing: **17.01.2013**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **15.03.2012 JP 2012059139**

(71) Applicant: **OMRON CORPORATION
Kyoto-shi, Kyoto 600-8530 (JP)**

(72) Inventor: **Yamashita, Takayoshi
c/o Omron Corporation
Kyoto, Kyoto 600-8530 (JP)**

(74) Representative: **Horn Kleimann Waitzhofer
Elsenheimerstraße 65
DE-80687 München (DE)**

(54) **Gesture recognition apparatus, electronic device, gesture recognition method, control program, and recording medium**

(57)     User's operability is improved by causing a gesture recognition apparatus to recognize repeated operation. A gesture recognition apparatus of the at least one embodiment of the present invention includes a gesture recognition unit for recognizing gesture based on a trajectory of movement of a command body, and identifying a process corresponding thereto, and an execution amount determination unit for determining a processing execution amount of the process to be executed by a processing execution entity, wherein the execution amount determination unit determines the processing execution amount on the basis of a change of a form of the command body.

FIG. 4

## Description

BACKGROUND OF THE INVENTION

### 1. TECHNICAL FIELD

The present invention relates to a gesture recognition apparatus, an electronic device, a gesture recognition method, a control program, and a recording medium for recognizing gesture.

### 2. RELATED ART

In recent years, gesture recognition techniques are applied and developed, as communication means between a person and a computer, in various kinds of fields such as intelligent robot, game, simulation, and production technology. More specifically, a gesture recognition apparatus performs image processing on a motion picture obtained by capturing motion of a subject who gives a command to the apparatus with a video camera (image-capturing unit), and recognizes a series of particular movement of the subject (hereinafter referred to as gesture). The subject who gives a command to the apparatus will be hereinafter referred to as a command body. The command body is, for example, a hand, a finger, an arm, an entire body of an animal (in particular, a person), or an object.

The computer can execute various kinds of processing according to the type of the gesture of the command body recognized by the gesture recognition apparatus.

More specifically, the gesture recognition apparatus compares a certain frame and another frame in a motion picture, and determines from where and to where the command body has moved, i.e., obtains the amount of variation between the frames, thus recognizing movement of the command body (such as movement direction), so that the gesture can be recognized.

For example, Japanese Unexamined Patent Publication No. 2005-352531 (published on December 22, 2005) discloses a gesture detection method and apparatus for detecting reciprocal movement of a particular portion of a subject.

Japanese Unexamined Patent Publication (Japanese Translation of PCT Application) No. 2011-517357 (published on June 2, 2011) discloses an apparatus for recognizing a gesture from two images of a command body (subject), and a method for operating a displayed image object with a user interface in accordance with input of the gesture. Japanese Unexamined Patent Publication (Japanese Translation of PCT Application) No. 2011-517357 (published on June 2, 2011) indicates that a camera capable of measuring a distance to a command body is used, and that the gesture is recognized from movement with regard to the depth of the command body.

However, the above conventional configurations involve the following problems. More specifically, there is a problem in that a conventional gesture recognition apparatus is not suitable as an input device for inputting a command for selecting a target object from among many objects displayed as options (image objects in the example of Japanese Translation of PCT Application No. 2011- 517357 (published on June 2, 2011) ) .

With a generally-available keyboard (for example, arrow key) and the like, a user repeatedly  perform operation for moving a cursor (such as pressing down an arrow key) until the user reaches a target object. Likewise, with the gesture recognition apparatus, a user has to repeatedly perform gesture for moving a cursor until the cursor reaches a target object.

In the past, there are ways to reduce the number of selection operations to reach the target object using a list display layout of selection objects. However, it is impossible to completely avoid repeated operation, and it is still cumbersome for a user to perform action to repeatedly input the gesture (move the command body).

The present invention has been devised to solve the problems described above, and an object thereof is to achieve a gesture recognition apparatus, an electronic device, a gesture recognition method, and a recording medium for improving user's operability by recognizing repeated operation on the basis of simple gesture input.

SUMMARY

In accordance with one aspect of at least one embodiment of the present invention, in order to solve the problems, a gesture recognition apparatus of the at least one embodiment of the present invention includes a gesture recognition part that recognizes gesture based on a trajectory of movement of a command body whose images are captured, and identifies a process corresponding to the recognized gesture as a process to be executed by a processing execution entity, and a processing execution amount determination part that determines a processing execution amount of the process to be executed by the processing execution entity which is identified by the gesture recognition part, wherein the processing execution amount determination part determines the processing execution amount based on a change of a form of the command body of whose images have been captured.

According to the configuration, first, the gesture recognition part recognizes gesture based on the trajectory of movement of the command body whose images are captured, and identifies the process corresponding to the recognized gesture. The process corresponding to the gesture means a process to be executed by the processing execution entity. The processing execution entity means an entity executing the processing corresponding to the gesture commanded by the user.

Subsequently, the processing execution amount determination part determines the processing execution amount of the process identified by the gesture recognition part, on the basis of the change of the form of the command body whose images have been captured. The processing execution amount is information indicating the amount of processing to be executed by the processing execution entity.

More specifically, the gesture recognition apparatus processes a motion picture obtained by capturing images of the command body, and accordingly, the gesture recognition apparatus can not only identify the contents of the process executed by the processing execution entity but also determine the amount of processing to be executed.

Accordingly, the user can easily inform the gesture recognition apparatus of how much processing commanded by the gesture is to be performed by just inputting the gesture by moving the command body as well as simply moving the form of the command body. More specifically, the user can command the gesture recognition apparatus (processing execution entity) to repeatedly perform the same process by inputting simple operation of changing the form of the command body, instead of repeatedly inputting the gesture multiple times.

For example, in the past, when the user wants the processing execution entity to move the cursor to the left 10 times, the user has to do the gesture corresponding to the process (for example, operation for moving the command body to the left) 10 times. In contrast, according to the gesture recognition apparatus of the at least one embodiment of the present invention, the user may perform operation of "moving" the command body "to the left" for only one time and apply change of the form of the command body for only one time (in this case, for example, change corresponding to the processing execution amount "10 times" is applied).

As a result, there is an advantage in that the user's operability can be improved.

Further, the gesture recognition apparatus preferably includes a form monitoring part that identifies an amount of change of the form of the command body, from each frame of a motion picture obtained by capturing the image of the command body, wherein the processing execution amount determination part determines the processing execution amount in proportion to the amount of change identified by the form monitoring part.

According to the configuration, the form monitoring part monitors the command body of which form is changed, and the amount of change is identified. The processing execution amount determination part may make determination such that the larger the amount of change is, the higher the processing execution amount becomes.

Therefore, the user adjusts the amount of change of the form of the command body, thereby simply specifying the amount of repetition thereof (processing execution amount) to the processing execution entity. For example, when the amount of change of the command body is increased to the amount which is 10 times the original, the processing execution entity can be commanded to repeatedly perform one process for 10 times by means of the gesture recognition apparatus.

As a result, there is an advantage in that the user's operability can be improved.

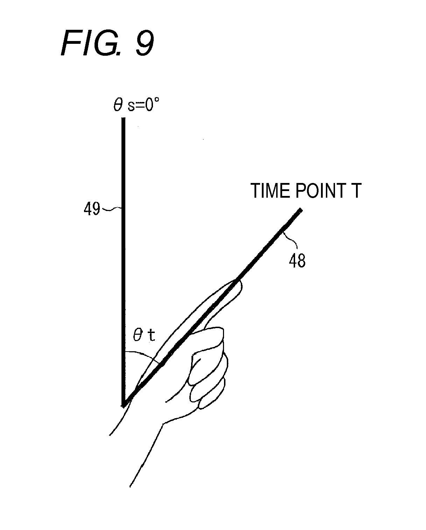

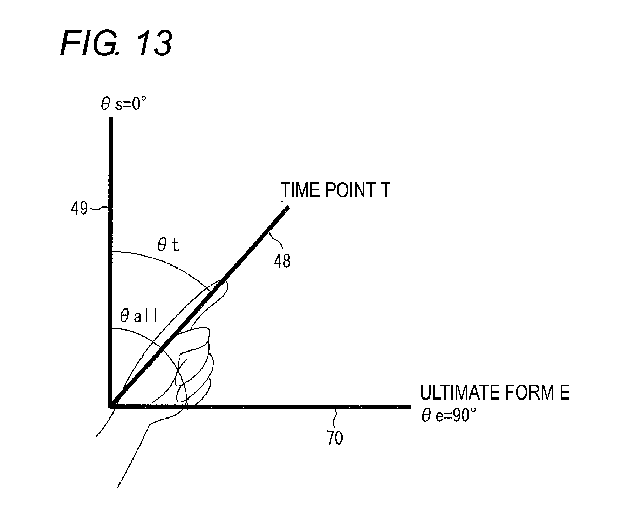

More specifically, the form monitoring part may identify the amount of change by comparing a reference form (for example, reference line 49 in FIGS. 9 and 13) of the command body determined in advance and a latest form of the command body whose images are captured.

According to the configuration, the form monitoring part can obtain the amount of change indicating how the form of the captured latest command body has changed through comparison with the absolute reference form of the command body determined in advance. Accordingly, the processing for identifying the amount of change can be simplified.

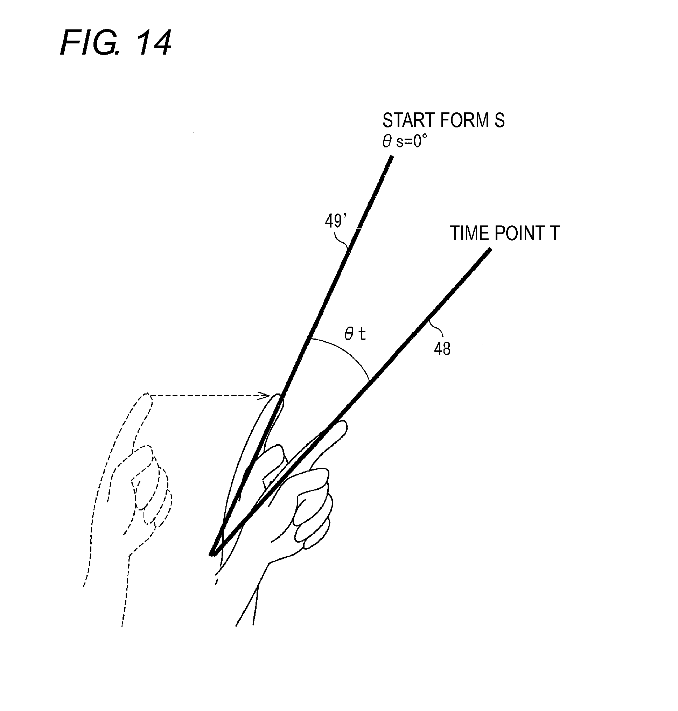

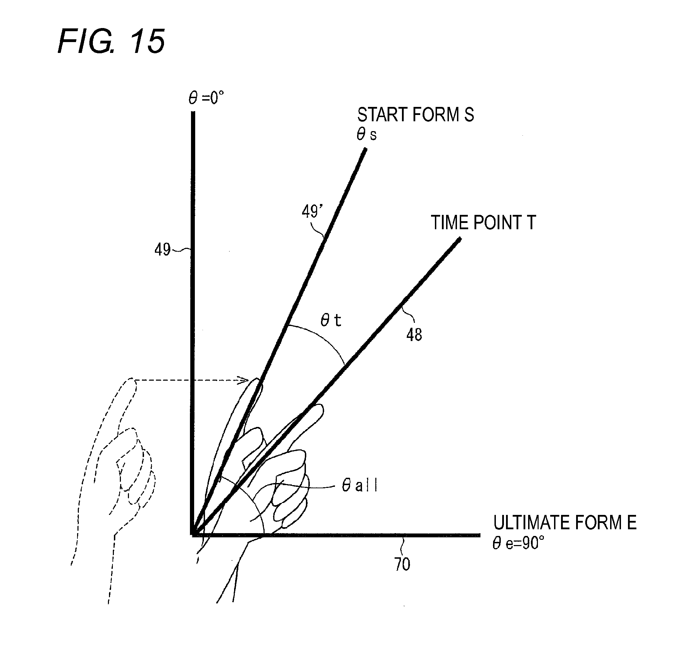

Alternatively, the form monitoring part may identify the amount of change by comparing a form of the command body at a time point at which the gesture recognition part recognizes a gesture (for example, start form s in FIGS. 14 and 15) and a latest form of the command body whose images are captured.

According to the configuration, after the user finishes movement for moving the command body for gesture input, the form monitoring part monitors operation continuously performed by the user to change the form of the command body to specify the processing execution amount. The form monitoring part deems that the form of the command body when the movement of the command body has been finished is the first form (start form), and identifies, as the amount of change, how the command body has been changed after that.

More specifically, the amount by which the command body has been moved by the user to specify the processing execution amount after the user finishes the operation for moving the command body is directly identified as the amount of change by the form monitoring part, and is directly converted into the processing execution amount by the processing execution amount determination part.

Therefore, the user feels that the operation for specifying the processing execution amount more precisely matches the amount of repetition of the process by the processing execution entity as a result, and this achieves more intuitive user interface for the user.

Further, the processing execution amount determination part may determine the processing execution amount on the basis of a ratio of an amount of change in a latest form identified by the form monitoring part (for example, $\theta t$ in FIGS. 13 and 15) to a maximum amount of change (for example, $\theta$all in FIGS. 13 and 15) in a final reference form determined in advance (for example, ultimate form e in FIGS. 13 and 15) corresponding to a maximum value of the processing execution amount of the processing execution entity.

According to the configuration, the maximum value of the processing execution amount of the processing execution entity is determined in advance, and the user can understand how much the user is required to change the form of the command body to cause the processing execution entity to execute the processing for the maximum amount. More specifically, the reference ultimate form is understood.

The processing execution amount determination part determines the processing execution amount actually executed by the processing execution entity in accordance with how much % the amount of change of the form of the command body changed by the user reaches with respect to the maximum amount of change of the reference ultimate form.

As described above, in the configuration in which the maximum amount of change with respect to the maximum value of the processing execution amount is determined in advance, the user can predict how much amount of processing is executed by how much the form of the command body is changed.

It should be noted that the form monitoring part may identify, as the amount of change, an angle by which an inclination of the command body is changed. It should be noted that the form monitoring part may identify an amount of change of an inclination of a finger serving as the command body.

According to the configuration, the user can specify the processing execution amount to the gesture recognition apparatus (processing execution entity) by performing a simple operation of changing the inclination of the finger.

Further, when an amount of change of a latest form of the command body identified by the form monitoring part is less than an amount of change of an immediately- before form of the command body, the processing execution amount determination part may determine to stop execution of the process by the processing execution entity.

When the amount of change of the latest form of the command body is less than the amount of change of the immediately-before form of the command body, this means that the user returns the change of the form of the command body that has been done until then, and makes it closer to an original form of the command body (reference form or start form).

The user is likely to think that the operation for returning the operation performed until then back to the original operation is associated with a result of stopping the process that has been executed until then.

As described above, the user interface for commanding the stop of processing execution can be made into an intuitive one for the user.

Alternatively, the form monitoring part may identify, with a negative number, the amount of change of the form of the command body that changes in a movement direction opposite to a movement direction of the command body, and when an amount of change of an latest form of the command body identified by the form monitoring part is a negative number, the processing execution amount determination part may determine a processing execution amount in the movement direction opposite to the original movement direction of the process identified by the gesture recognition part.

When the amount of change of the latest form of the command body is a negative number, this means that the user changes the form of the command body in the direction opposite to the direction in which the user moves the command body for gesture input.

The user is likely to think that the operation for moving the command body in the direction opposite to the direction in which it is moved until then is associated with a result of continuing the process in the direction opposite to the moving direction in which it is done until then.

As described above, the user interface for commanding switching the moving direction of the process to the opposite side can be made into an intuitive one for the user.

Further, the processing execution amount determination part may determine, as the processing execution amount, a number of times the processing execution entity executes the process identified by the gesture recognition part.

Alternatively, when the process identified by the gesture recognition part is a process for a focus point to be changed from any one of a plurality of options arranged in order, to another option, the processing execution amount determination part may determine, as the processing execution amount, a number of options that shows how many options at intervals the focus point is moved.

As described above, in the gesture recognition apparatus of the at least one embodiment of the present invention, the processing execution amount determination part may determine the processing execution amount in proportion to an amount of change of an angle of an inclination of an finger which serves as the command body whose images are captured, and is identified by the form monitoring part, and when the process identified by the gesture recognition part is a process for a focus point to be changed from any one of a plurality of options arranged in order, to another option, the processing execution amount is a number of options that shows how many options at intervals the focus point is moved.

It should be noted that the processing execution amount determination part may determine the processing execution amount on the basis of change of the form of the command body that has started the movement.

Accordingly, the user can continuously use the command body, which is used for movement of gesture input, for operation for specifying the processing execution amount.

Alternatively, the processing execution amount determination part may determine the processing execution amount on the basis of change of a form of a second command body whose images are captured, which is different from the command body that has started the

When multiple command bodies are used, the power of expression for operation for specifying the processing execution amount is increased, and this allows the processing execution amount to be specified more precisely with more number of steps.

In accordance with another aspect of the at least one embodiment of the present invention, the at least one embodiment of the present invention of the application also includes an electronic device including the above gesture recognition apparatus, an image-capturing unit for providing captured images obtained by capturing images of the command body to the gesture recognition apparatus, and a processing execution entity for executing the process identified by the gesture recognition apparatus in accordance with the processing execution amount determined by the gesture recognition apparatus.

In the electronic device, when the process identified by the gesture recognition part may be a process for a focus point to be changed from any one of a plurality of options arranged in order, to another option, the processing execution amount determined by the gesture recognition apparatus may be a number of options that shows how many potions at intervals the focus point is moved, and the processing execution entity may move the focus point at intervals of options whose number is determined by the gesture recognition apparatus.

In accordance with still another aspect of the at least one embodiment of the present invention, in order to solve the problems, a gesture recognition method of the at least one embodiment of the present invention includes a gesture recognition step that recognizes gesture based on a trajectory of movement of a command body whose images are captured, and identifies a process corresponding to the recognized gesture as a process to be executed by a processing execution entity, and a processing execution amount determining step that determines a processing execution amount of the process to be executed by the processing execution entity which is identified by the gesture recognition step, wherein in the processing execution amount determining step, the processing execution amount is determined based on change of a form of the command body whose images have been captured.

In accordance with yet another aspect of the at least one embodiment of the present invention, the gesture recognition apparatus may be achieved with a computer, and in this case, the scope of the at least one embodiment of the present invention also includes a control program for a gesture recognition apparatus achieving the gesture recognition apparatus using a computer by causing the computer to operate as each of the parts and a computer-readable recording medium having the control program recorded thereon.

In order to solve the problems, a gesture recognition apparatus of the at least one embodiment of the present invention includes a gesture recognition part that recognizes gesture based on a trajectory of movement of a command body whose images are captured, and identifies a process corresponding to the recognized gesture as a process to be executed by a processing execution entity, and a processing execution amount determination part that determines a processing execution amount of the process to be executed by the processing execution entity which is identified by the gesture recognition part, wherein the processing execution amount determination part determines the processing execution amount, based on change of a form of the command body whose images have been captured.

In order to solve the problems, a gesture recognition method of the at least one embodiment of the present invention includes a gesture recognition step that recognizes gesture based on a trajectory of movement of a command body whose images are captured, and identifies a process corresponding to the recognized gesture as a process to be executed by a processing execution entity, and a processing execution amount determining step that determines a processing execution amount of the process to be executed by the processing execution entity which is identified by the gesture recognition step, wherein in the processing execution amount determining step, the processing execution amount is determined based on change of a form of the command body whose images have been captured.

There is an advantage in that repeated operation can be recognized on the basis of simple gesture input, and as a result, user's operability can be improved.

BRIEF DESCRIPTION OF THE DRAWINGS

FIG. 1 is a block diagram illustrating an essential configuration of a gesture recognition apparatus according to an embodiment of the at least one embodiment of the present invention provided in a digital television set (electronic device);

FIG. 2 is a figure illustrating a specific example of one frame of a motion picture provided to the gesture recognition apparatus, and is a figure explaining operation of a start recognizing unit;

FIGS. 3A and 3B are figures illustrating a specific example of a command body inclusion region provided to a command body detection unit, and are figures explaining operation of the command body detection unit;

FIG. 4 is a figure illustrating a specific example of a command body reference point in a frame tracked by a gesture recognition unit 22;

FIG. 5 is a figure illustrating a specific example of a command body reference point in a frame tracked by the gesture recognition unit 22;

FIG. 6 is a figure illustrating a specific example and a data structure of a gesture rule stored in a gesture rule storage unit;

9      **EP 2 650 754 A2**      10

FIG. 7 is a figure illustrating a specific example of a frame provided to a form monitoring unit 23, immediately after the gesture recognition unit recognizes gesture;

FIG. 8 is a figure illustrating a specific example of a method for identifying a principal axis of a finger, according to which the form monitoring unit identifies an inclination of the finger of the monitoring target;

FIG. 9 is a figure illustrating a specific example of a method according to which the form monitoring unit identifies inclination of a finger;

FIG. 10 is a figure illustrating a specific example of a display screen obtained as a result of execution of processing by a processing execution entity in accordance with recognized gesture;

FIG. 11 is a figure illustrating a specific example of a display screen obtained as a result of execution of processing by a processing execution entity in accordance with recognized gesture;

FIG. 12 is a flowchart illustrating a flow of object processing executed by a processing execution entity and gesture recognition processing executed by the gesture recognition apparatus;

FIG. 13 is a figure for explaining a processing execution amount determining method according to another embodiment of the at least one embodiment of the present invention;

FIG. 14 is a figure for explaining a processing execution amount determining method according to another embodiment of the at least one embodiment of the present invention;

FIG. 15 is a figure for explaining a processing execution amount determining method according to another embodiment of the at least one embodiment of the present invention;

FIG. 16 is a figure for explaining a method for determining stop of processing execution in view of movement direction of a form change with respect to movement direction during gesture input;

FIG. 17 is a figure for explaining a method for determining movement direction of processing to be executed in view of movement direction of a form change with respect to movement direction during gesture input;

FIG. 18 is a figure illustrating another example of the amount of change of a form of a command body monitored by the form monitoring unit;

FIG. 19 is a figure illustrating another example of the amount of change of a form of a command body monitored by the form monitoring unit;

FIGS. 20A to 20C are figures illustrating another example of the amount of change of a form of a command body monitored by the form monitoring unit;

FIG. 21 is a figure illustrating another example of the amount of change of a form of a command body monitored by the form monitoring unit;

FIG. 22 is a figure illustrating the gesture recognition apparatus of the at least one embodiment of the present invention mounted on another electronic device;

FIG. 23 is a figure illustrating the gesture recognition apparatus of the at least one embodiment of the present invention mounted on another electronic device;

FIG. 24 is a figure illustrating the gesture recognition apparatus of the at least one embodiment of the present invention mounted on another electronic device;

DETAILED DESCRIPTION

«First embodiment»

An embodiment of the present invention is as follows when it is explained with reference to drawings.

In the embodiment explained below, a case will be explained where the gesture recognition apparatus of the at least one embodiment of the present invention is applied to a display apparatus serving as a processing execution entity. The processing execution entity means an entity that executes processing corresponding to a gesture recognized by the gesture recognition apparatus of the at least one embodiment of the present invention. The display apparatus is, for example, not limited thereto, but may be a digital television set, tablet PC (Personal Computer), a smart phone, a cellular phone, an electronic book reader, an electronic organizer, a PDA (Personal Digital Assistant), a personal computer, a notebook PC, a digital camera, a digital video camera, a household game machine, a portable game machine, a digital photo frame, and the like. It should be noted that the gesture recognition apparatus of the at least one embodiment of the present invention may also be applied to a recording/playback apparatus (a BD (Blu-ray Disc) recorder, a DVD (Digital Versatile Disc) recorder) and the like, serving as the processing execution entity, which are connected to these display apparatuses.

In the description below, for example, a case will be explained where the gesture recognition apparatus of the at least one embodiment of the present invention is applied to a digital television set.

The same or corresponding portions in the following drawings are denoted with the same reference numerals, and description thereabout is not made repeatedly. The dimensional relationship and shape such as length, size, and width in the drawings are changed as necessary for clarifying and simplifying the drawings, and do not represent actual dimensions and shapes.

[Configuration of gesture recognition apparatus]

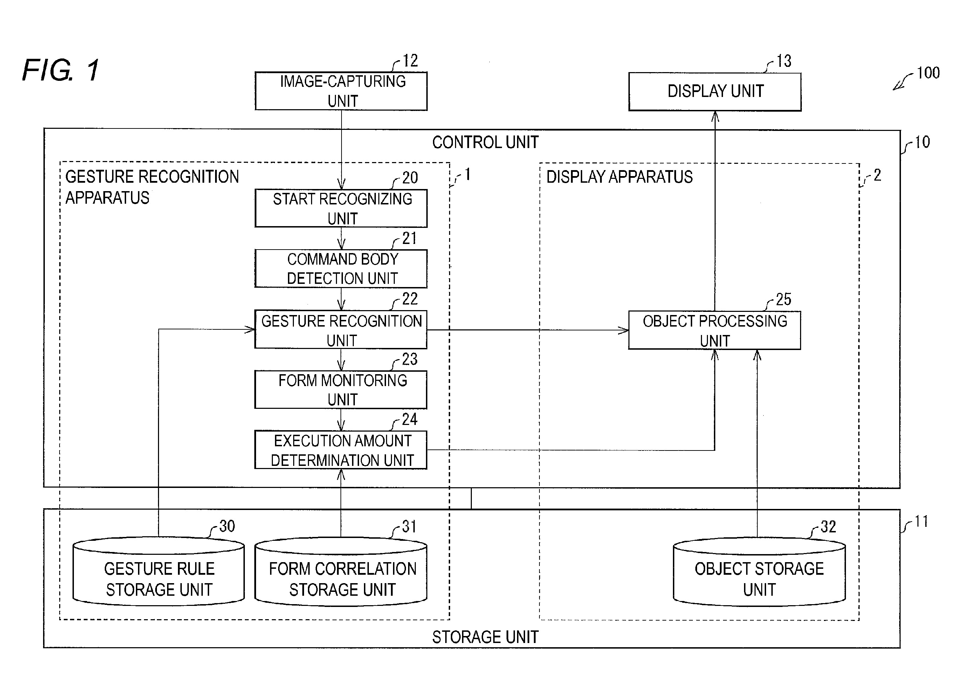

FIG. 1 is a block diagram illustrating an essential configuration of a gesture recognition apparatus according to an embodiment of the present invention, provided in a digital television set serving as a display apparatus.

First, hardware configuration of the digital tele-

6

vision set will be explained. As shown in FIG. 1, the digital television set 100 includes at least a control unit 10, a storage unit 11, an image- capturing unit 12, and a display unit 13. In addition, the digital television set 100 has generally- available functions of the digital television set generally- available function, but portions thereof not directly related to the at least one embodiment of the present invention are omitted from description.

The image- capturing unit 12 captures an image around the digital television set 100 (in particular, an image in front of the digital television set 100), and obtains a motion picture for finding movement of a command body. The image- capturing unit 12 is achieved as, for example, CCD (Charge Coupled Devices) camera or CMOS (Complementary Metal- Oxide- Semiconductor) camera, but other image- capturing apparatuses may also be used as the image- capturing unit 12. The motion picture obtained by the image- capturing unit 12 through image- capturing is provided to a gesture recognition apparatus 1 provided in the digital television set 100. For example, the user moves the command body (finger, face, entire body, tool, or the like) in front of the image-capturing unit 12. Accordingly, the user can input gesture into the gesture recognition apparatus 1.

The display unit 13 displays information processed by the digital television set 100 (the gesture recognition apparatus 1, or a display apparatus 2 achieving generally-available functions of the digital television set in the digital television set 100). For example, the display unit 13 displays an operation screen, with which the user operates the digital television set 100, as a GUI (Graphical User Interface) screen. The display unit 13 displays, as a list, images (motion pictures or still pictures) or icons, which can be processed by the digital television set 100. The display unit 13 can display not only the images or icons but also various options which can be selected by the user (hereinafter referred to as objects) as a list. The display unit 13 is constituted by, for example, a display apparatus such as LCD (liquid crystal display).

The storage unit 11 non-temporarily stores (1) a control program executed by the control unit 10 of the digital television set 100, (2) an OS program executed by the control unit 10, (3) an application program with which the control unit 10 executes various kinds of functions provided in the gesture recognition apparatus 1 or the display apparatus 2, and (4) various kinds of data which are read when the application program is executed. Alternatively, the storage unit 11 temporarily stores (5) data, operation results, and the like used for operation in the process in which the control unit 10 executes various kinds of functions. For example, the above data (1) to (4) are stored to a nonvolatile storage apparatus such as a ROM (read only memory), a flash memory, EPROM (Erasable Programmable ROM), an EEPROM (Electrically EPROM), and an HDD (Hard Disc Drive). For example, the data (5) are stored to a volatile storage apparatus such as a RAM (Random Access Memory). The type of storage apparatus to store a certain type of data is determined as necessary in accordance with, e.g., intended use, convenience, cost, and physical constraints of the digital television set 100. For example, the motion picture data obtained by the image-capturing unit 12 2 through image-capturing are temporarily saved in the storage unit 11 achieved as the volatile storage apparatus, so that the gesture recognition apparatus 1 can perform processing. On the other hand, rules and the like required when the gesture recognition apparatus 1 recognizes gesture are non-temporarily saved in the storage unit 11 achieved as the nonvolatile storage apparatus. For example, data of objects displayed on the display unit 13 by the display apparatus 2 (digital television set 100) are non-temporarily saved in the storage unit 11 achieved as the nonvolatile storage apparatus.

The control unit 10 centrally controls each unit of the digital television set 100. As function blocks for achieving the gesture recognition apparatus 1, the control unit 10 includes, at least, a gesture recognition unit 22, a form monitoring unit 23, and an execution amount determination unit 24. Further, as a function block for achieving the gesture recognition apparatus 1, the control unit 10 may include a start recognizing unit 20 and a command body detection unit 21.

The control unit 10 may include an object processing unit 25 as a function block for achieving the display apparatus 2 (digital television set).

Each function block of the control unit 10 can be achieved by causing a CPU (central processing unit) and the like to read programs stored in a nonvolatile storage apparatus achieved as a ROM (read only memory), an NVRAM (non-Volatile random access memory) and the like to a volatile storage apparatus such as a RAM (random access memory) and execute the programs.

Subsequently, various kinds of functions achieved by the control unit 10 of the digital television set 100 will be explained in detail.


(Gesture recognition function of the gesture recognition apparatus 1 of the at least one embodiment of the present invention)


The start recognizing unit 20 recognizes start of gesture input.

While the digital television set 100 is on, the image-capturing unit 12 continues taking motion pictures at all times. More specifically, the motion pictures are provided from the image-capturing unit 12 at all times no matter whether the user inputs gesture (intentionally moves the command body) or the user does not input gesture (does not intentionally move the command body). Therefore, in order to distinguish the former case from the latter case, the motion picture is preferably processed and gesture recognition processing is executed only in the former case. Accordingly, gesture recognition processing of which processing load is high would not be executed worthlessly for frames of motion picture that do not require any gesture recognition processing.

The start recognizing unit 20 recognizes special movement of which type is different from movement when gesture is input to the digital television set 100, which is recognized by the gesture recognition unit 22. Then, the start recognizing unit 20 recognizes this special movement as a sign indicating start of gesture input, which is input into the gesture recognition apparatus 1.

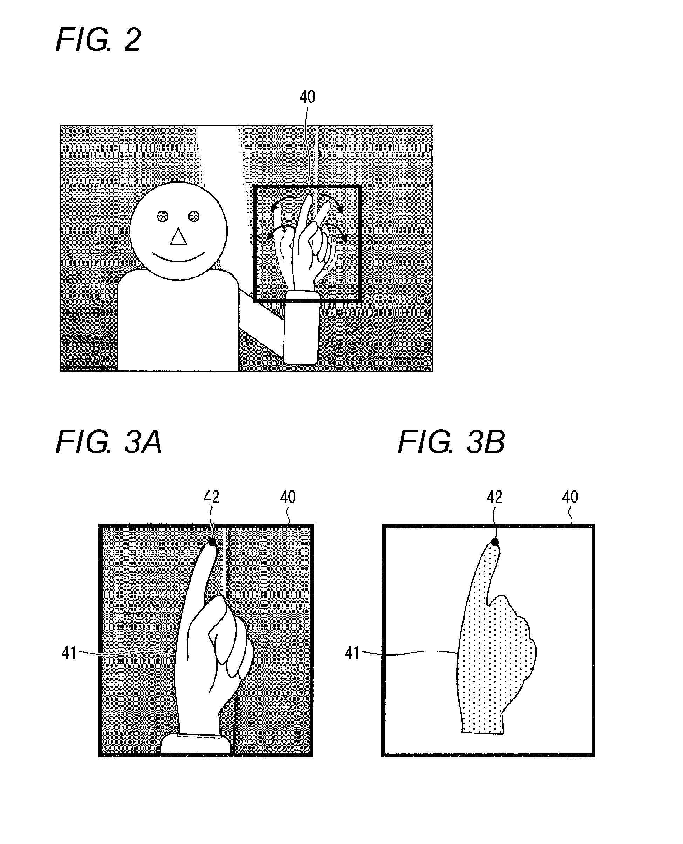

FIG. 2 is a figure illustrating a specific example of one frame of a motion picture provided to the gesture recognition apparatus 1, and is a figure explaining operation of the start recognizing unit 20.

In the present embodiment, for example, the start recognizing unit 20 recognizes movement of a finger or a hand quickly moved by the user, as a sign of gesture input start.

More specifically, the start recognizing unit 20 processes, in order, each frame of a motion picture successively provided by the image-capturing unit 12, and obtains an inter-frame difference in order. The start recognizing unit 20 temporarily stores and accumulates difference values between the obtained frames to the storage unit 11. When an accumulative value of this difference values is more than a predetermined value, the start recognizing unit 20 recognizes a sign of gesture input start has been input.

For example, as shown in FIG. 2, the user quickly waves a finger to the right and left for a certain period of time before the image-capturing unit 12. The start recognizing unit 20 recognizes rapidly changed portion in a region 40, by comparing the frames. Accordingly, the start recognizing unit 20 can recognize that the sign of gesture input start has been input.

In the present embodiment, further, the start recognizing unit 20 preferably identifies, as a command body inclusion region 40 including a command body, the region 40 which is determined to have an accumulation of difference values equal to or higher than a certain level.

This enables improvement of processing efficiency of each function unit (in particular, command body detection unit 21) in downstream steps. First, each function unit in downstream steps performs processing for identifying the command body in order to recognize movement of the command body. When a region scanned to identify the command body is limited to the command body inclusion region 40 from the entire frames, it is evident that the processing efficiency of the command body detection unit 21 is significantly improved.

The command body detection unit 21 is configured to detect the command body with which gesture is input.

The gesture recognition apparatus 1 is an apparatus that recognizes gesture which is input in accordance with what kind of movement the command body makes, and therefore, it is necessary to identify where in the frame the target of which movement is to be tracked is located. The command body detection unit 21 detects the command body region to be tracked.

FIGS. 3A and 3B are figures illustrating a specific example of a command body inclusion region 40 provided to a command body detection unit 21, and are figures explaining operation of the command body detection unit 21.

In the present embodiment, the command body is user's finger, and the user inputs gesture by moving the finger in front of the image-capturing unit 12. Therefore, in the present embodiment, as shown in FIG. 3A or 3B, the command body detection unit 21 detects, as the command body region 41, the region of the user's finger included in the command body inclusion region 40.

The method for the command body detection unit 21 to detect the command body region 41 is not limited thereto, and the following method is possible. For example, the command body detection unit 21 may detect the command body region 41 by contour extraction method such as snake method (broken line frame region of FIG. 3A). Alternatively, the command body detection unit 21 may use flesh color model in HSV color space to detect a flesh color region as the command body region 41 (dot region in FIG. 3B).

Accordingly, each function unit in downstream steps (in particular, gesture recognition unit 22) can clearly limit, into the command body region 41, the command body to be tracked for gesture recognition.

Further, in the present embodiment, the command body detection unit 21 preferably detects one point included in the command body region 41 as a command body reference point 42. In the present embodiment, for example, the command body detection unit 21 detects end of the finger as the command body reference point 42.

Accordingly, the gesture recognition unit 22 can clearly limit the command body to be tracked for gesture recognition, not into the command body region 41 but into the command body reference point 42. When the target for tracking the command body is limited from the command body region 41 to the command body reference point 42, it is evident that the processing efficiency of the gesture recognition unit 22 is significantly improved.

The gesture recognition unit 22 recognizes gesture from movement of the command body, and identifies the contents of the command corresponding to the gesture. In the present embodiment, each gesture is associated with processing which is to be executed by the digital television set 100. Therefore, the gesture recognition unit 22 identifies the contents of processing executed by the digital television set 100, corresponding to the recognized gesture.

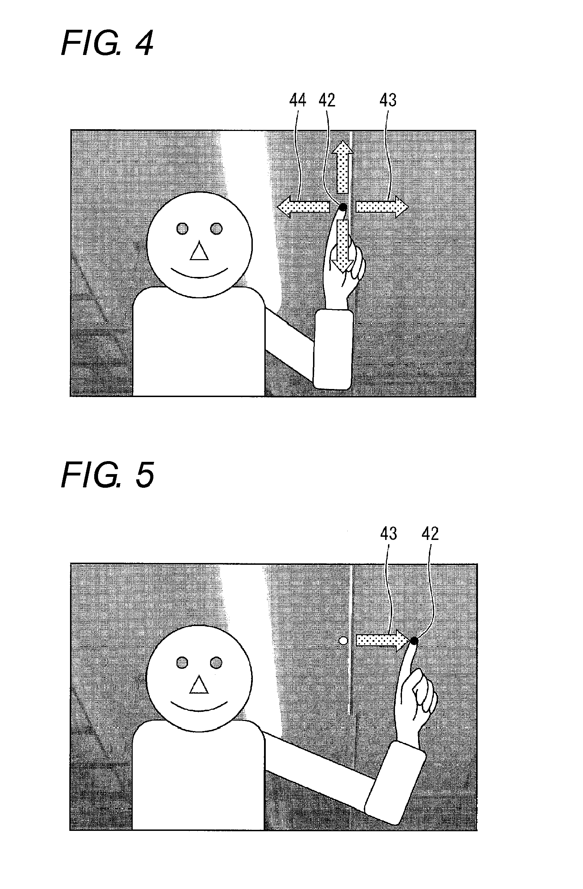

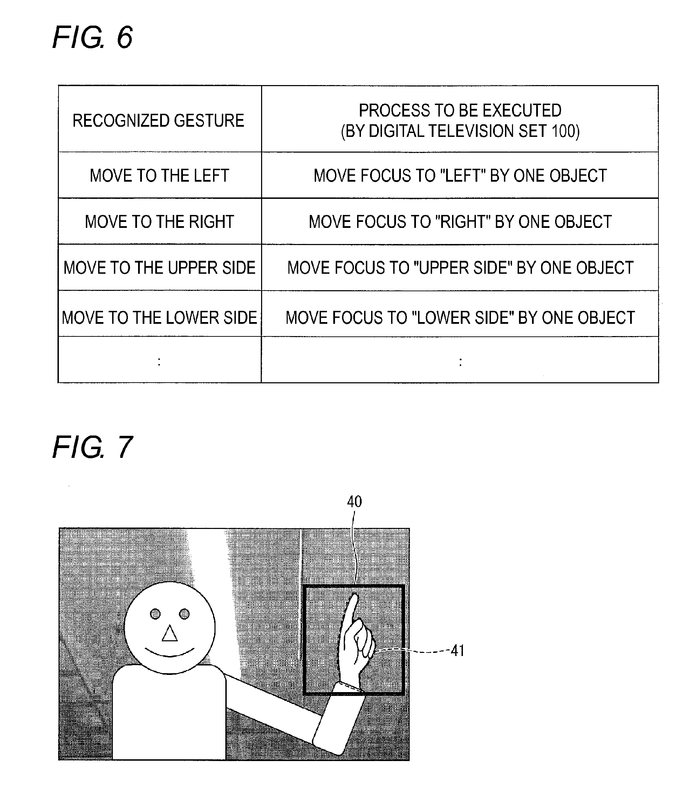

FIGS. 4 to 6 are figures explaining operation of the gesture recognition unit 22. FIGS. 4 and 5 are figures illustrating specific examples of a command body reference point 42 in a frame tracked by the gesture recognition unit 22. FIG. 6 is a figure illustrating a specific example and a data structure of a gesture rule stored in a gesture rule storage unit 30.

In the present embodiment, for example, the gesture recognition unit 22 recognizes, as a gesture, movement of the command body to upper, lower, right, and left sides. More specifically, as shown in FIG. 4, the gesture recognition unit 22 recognizes four types of gestures, i.e., "move to the left", "move to the right", "move to the upper side", and, "move to the lower side" of the command body. The gesture recognition unit 22 may recognize any gesture which is not limited to the above four types, such as "making a circle".

More specifically, the gesture recognition unit 22 tracks the command body reference point 42 detected by the command body detection unit 21, and successively processes each frame of the motion picture. Then, the gesture recognition unit 22 successively obtains a movement direction and a displacement of the command body reference point 42. The displacement can be obtained by seeking an inter-frame difference with regard to the position of the command body reference point 42. The gesture recognition unit 22 temporarily stores and accumulates the displacement of the command body reference point 42 to the storage unit 11. When the accumulative value of the displacement is more than a predetermined value, the gesture recognition unit 22 recognizes that the command body moves to in the movement direction thus sought.

For example, in the example as shown in FIG. 5, the gesture recognition unit 22 recognizes "movement" of the command body reference point 42 and the movement direction 43 when the command body reference point 42 moves from the original position (white circle) to the current position (black circle).

The right arrow in FIG. 4, i.e., the movement direction 43, indicates that the command body reference point 42 moves to the right in this frame (when seen from the image-capturing unit 12). On the other hand, the movement direction 43 is a direction in which the command body is recognized as being moved to the left by the user himself/herself who moves the command body. Therefore, when the movement direction of the command body (command body reference point 42) is determined to be the movement direction 43, the gesture recognition unit 22 recognizes that the gesture, "move to the left", has been input. In the opposite direction, i.e., when the movement direction 44 is obtained as being the movement direction of the command body reference point 42, the gesture recognition unit 22 recognizes that a gesture, "move to the right", has been input.

In this case, the type of gesture is not shown, but may be identified by identification information. For example, identification information such as "00", "01", "10", and "11" may be assigned to gestures, i.e., "move to the left", "move to the right", "move to the upper side", and "move to the lower side", respectively. In this case, when the movement direction 43 (FIGS. 4 and 5) are identified, the gesture recognition unit 22 recognizes that a gesture "00" has been input.

Subsequently, the gesture recognition unit 22 identifies the contents of a command corresponding to the recognized gesture, i.e., the contents of processing to be executed by the digital television set 100. In the present embodiment, the gesture recognition unit 22 identifies the processing corresponding to the input gesture in accordance with a gesture rule (FIG. 6) stored in the gesture rule storage unit 30.

As shown in FIG. 6, in the gesture rule storage unit 30, processing executed by the digital television set 100 is associated for each type of gesture recognized by the gesture recognition unit 22. In FIG. 6, the gesture rule is shown as a table format, but this is not intended to limit the data structure of the gesture rule stored in the gesture rule storage unit 30 to only a table.

In the example as shown in FIG. 6, the gesture "move to the left" based on the movement direction 43 is associated with processing "move the focus to the left by one object". Therefore, when the command body moves along the movement direction 43, the gesture recognition unit 22 recognizes the gesture "move to the left", and identifies that the processing to be executed by the digital television set 100 is "move the focus to the left by one object".

The form monitoring unit 23 monitors change of a form of the command body, and identifies the amount of change. The form monitoring unit 23 may start monitoring the form of the command body after the gesture recognition unit 22 starts processing of gesture recognition, or may start monitoring the form of the command body after the gesture recognition unit 22 recognizes the gesture. The form monitoring unit 23 may monitor the form change of the command body (finger) moved by the user to input gesture, or monitor the form change of another command body (second command body) appearing in the same frame as the command body.

In the present embodiment, first, the gesture recognition unit 22 recognizes the gesture, and thereafter, this time, the form monitoring unit 23 monitors the form change of the command body moved (being moved) to input the gesture. More specifically, the user moves the command body in any direction, i.e., any one of the upper side, lower side, left, and right, to input the gesture, and thereafter, changes the form of the command body. In the at least one embodiment of the present invention, the operation for changing the form of the command body is a processing execution amount specification operation for commanding the amount of the processing corresponding to the gesture input in advance is repeated. In the at least one embodiment of the present invention, instead of repeatedly inputting the same gesture, the user can command the digital television set 100 to perform repeat processing by performing the above processing execution amount specification operation only once.

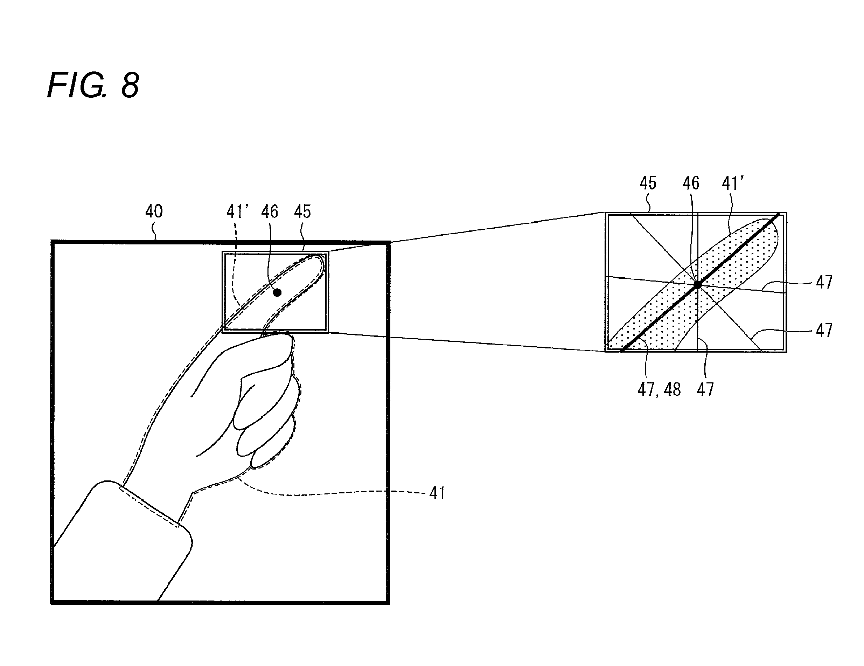

FIGS. 7 to 9 are figures for explaining operation of the form monitoring unit 23. FIG. 7 is a figure illustrating a specific example of a frame which is input into the gesture recognition apparatus 1, immediately after the gesture recognition unit 22 recognizes gesture. FIG. 8 is a figure illustrating a specific example of a method for identifying a principal axis of a finger, according to which the form monitoring unit 23 obtains an inclination of the finger serving as the form of the command body. FIG. 9 is a figure illustrating a specific example of a method according to which the form monitoring unit 23 identifies the inclination of the finger.

In the present embodiment, for example, the form monitoring unit 23 monitors, as change of the form, the command body which has finished movement for the input, i.e., change of the inclination of the user's finger.

First, as shown in FIG. 7, the form monitoring unit 23 identifies the command body which becomes a start target, from a frame immediately after the gesture recognition unit 22 recognizes the gesture. In this case, the form monitoring unit 23 identifies the command body inclusion region 40 identified by the start recognizing unit 20 and the command body region 41 identified by the command body detection unit 21. In this case, the command body region 41 is the finger with which the gesture had been input until then.

Subsequently, in the present embodiment, the form monitoring unit 23 identifies the principal axis serving as a reference of the finger of the monitoring target, in order to obtain the inclination of the user's s finger. The method according to which the form monitoring unit 23 obtains the principal axis of the finger is not limited thereto, and, for example, the following methods are possible.

As shown in FIG. 8, the form monitoring unit 23 identifies a protruding portion 41' having a protruding shape (shape of finger) from the command body region 41 in the command body inclusion region 40, and crops a rectangular shape circumscribing this protruding portion as a region in question 45. Then, the form monitoring unit 23 obtains a barycenter 46 of the protruding portion 41' of the region in question 45. The form monitoring unit 23 defines a straight line 47 passing the barycenter 46. There are numerous straight lines 47 passing the barycenter 46, and therefore, in the present embodiment, for example, the form monitoring unit 23 may define straight lines 47 passing the barycenter 46 on every five degrees with respect to the straight line 47 vertically passing the barycenter 46. Subsequently, the form monitoring unit 23 identifies, as the principal axis of the finger, one of the defined straight lines 47 that has the longest line segment overlapping the protruding portion 41' in the region in question 45. In the example as shown in FIG. 8, the form monitoring unit 23 identifies the thick straight line 47 as the principal axis 48, which is the straight line having the longest line segment overlapping the protruding portion 41'.

Finally, the form monitoring unit 23 can obtain the inclination of the command body (user's finger), i.e., the monitoring target, by obtaining the angle between the principal axis 48 of the finger thus obtained and the straight line having a reference angle. Then, by monitoring the change of the angle, it is possible to monitor the change of the form, i.e., the change of the inclination of the finger.

In the present embodiment, for example, as shown in FIG. 9, the form monitoring unit 23 defines a vertical line with respect to the frame as a reference line 49. In this case, the form monitoring unit 23 deems that the inclination θs of the reference line 49 is 0 degrees. Then, form monitoring unit 23 obtains an angle θt between the reference line 49 and the principal axis 48 of the finger thus obtained in a frame at a certain time point t. The form monitoring unit 23 obtains the obtained angle θt as the inclination of the finger at the time point t.

The user can gradually incline the finger in accordance with the processing execution amount which is to be executed by the digital television set 100. Each frame of the motion picture showing operation of inclining the finger is successively provided from the image-capturing unit 12 to the gesture recognition apparatus 1.

For each frame (t, t + 1, t + 2, ...), the form monitoring unit 23 successively obtains the principal axis 48 of the finger, and monitors the change of the inclination of the finger. The form monitoring unit 23 successively notifies the execution amount determination unit 24 of the inclination θt of the finger thus obtained.

It should be noted that the form monitoring unit 23 is not limited to the above example, and, for example, the inclination of the finger may be obtained by using ellipse fitting on the command body region 41.

The execution amount determination unit 24 determines the amount of processing (hereinafter processing execution amount) to be executed by the digital television set 100, in accordance with the form of the command body obtained by the form monitoring unit 23. The execution amount determination unit 24 may express the processing execution amount using any unit. For example, execution amount determination unit 24 may determine the number of executions of processing as the processing execution amount, or may determine the number of objects to be processed, as the processing execution amount.

In the present embodiment, as shown in FIG. 6, the processing executed by the digital television set 100 is processing for moving the focus (cursor) by one object (option) in any direction. Accordingly, in the present embodiment, the execution amount determination unit 24 determines, as the processing execution amount, the number of times the processing for "changing the focus by one object in a predetermined direction" is continuously executed (the number of times the processing is executed), in accordance with the inclination of the finger obtained by the form monitoring unit 23. In accordance with the inclination of the finger obtained by the form monitoring unit 23, the execution amount determination unit 24 may determine, as the processing execution amount, the above "predetermined number of objects" when the processing for "changing the focus by predetermined number of objects in the predetermined direction" is executed.

When the execution amount determination unit 24 determines the number of times the above processing is executed, the digital television set 100 continuously executes the processing for "changing the focus by one object in the predetermined direction" for the determined number of times the processing is executed.

When the execution amount determination unit 24 determines the above "predetermined number of objects", the digital television set 100 changes the focus for the determined number of objects in the predetermined direction.

In order for the execution amount determination unit 24 to determine the processing execution amount, it is necessary to define, in advance, a correlation between the amount of change of the form, i.e., the inclination of the finger (form change amount) and the processing execution amount in accordance thereto.

The form correlation storage unit 31 stores the correlation between the amount of change of the form of the command body and the processing execution amount. Information about the correlation stored in the form correlation storage unit 31 may be achieved in a form of an associated table, or may be achieved in a form of a calculation expression. In any case, the execution amount determination unit 24 can determine the processing execution amount on the basis of the amount of change of the form thus obtained, by looking up information about the correlation stored in the form correlation storage unit 31.

The method according to which the execution amount determination unit 24 determines the processing execution amount is not limited thereto, and, for example, the following methods are possible.

Assume that the gesture has been input, and the user subsequently performs operation for inclining the finger which is the command body. At this occasion, at a certain time point t, the frame at the time point t is obtained from the image-capturing unit 12.

The form monitoring unit 23 obtains the inclination of the finger $\theta t$ at the time point t.

In accordance with a predetermined calculation expression below, the execution amount determination unit 24 determines a processing execution amount Mt at the time point t from the inclination of the finger $\theta t$.

$$Mt = \alpha \times \theta t$$

In this case, a denotes a coefficient defined in advance. The above calculation expression and coefficient a are stored in the form correlation storage unit 31, and are read by the execution amount determination unit 24. In this manner, according to the calculation expression, the more the user inclines the finger, the higher processing execution amount the execution amount determination unit 24 can determine.

For example, when the coefficient a is '0.5 (times) ', the inclination of the finger $\theta t$ at the time point t obtained by the form monitoring unit 23 is 60 degrees. In this case, the execution amount determination unit 24 determines that the processing execution amount Mt at the time point t is $0.5 \times 60 = 30$ times. However, if the user inclines the finger 80 degrees, the execution amount determination unit 24 determines that the processing execution amount is 40 times.

At this moment, suppose that, in the steps upstream of the form monitoring unit 23 and the execution amount determination unit 24, the gesture recognition unit 22 identifies that the processing corresponding to the input gesture is "move the focus to the 'left' by one object".

In this case, a command for repeating the processing for "moving the focus to the 'left' by one object" for 30 times is input from the gesture recognition apparatus 1 into the display apparatus 2 (i.e., digital television set 100).

(Object processing function in display apparatus 2)

The object processing unit 25 processes each object stored in the object storage unit 32. In the present embodiment, the object processing unit 25 displays each object which is an option to the display unit 13. Further, the object processing unit 25 displays a selected (focused) object in such a manner that it is distinguished from other non-selected objects.

For example, the object processing unit 25 controls focus of the object. More specifically, the object processing unit 25 applies focus to a particular object, so that the object is distinguished from other non-selected objects. Further, in order to visualize it, the object processing unit 25 controls the cursor display position to apply the cursor to the focused object. When the focus is moved to another object, the object processing unit 25 sets the cursor on the another object. For example, when the object is a thumbnail image, the object processing unit 25 reads a plurality of thumbnail images from the object storage unit 32, and displays them as a list in tiles format. Then, the cursor is applied to the focused one of the thumbnail images and is displayed.

Alternatively, when the object is a page (option) of an electronic book, the focus is controlled as follows. More specifically, the object processing unit 25 may display only the focused page to the display unit 13. Then, when another page is selected, the focus is changed to the another page, and the page displayed until then are not displayed, and the another page that is newly focused is displayed.

The object processing unit 25 can operate according to a command provided from the gesture recognition apparatus 1. More specifically, the processing corresponding to the gesture recognized by the gesture recognition unit 22 of the gesture recognition apparatus 1 is executed by the object processing unit 25 in accordance with the command from the gesture recognition unit 22. The above processing is repeated so as to satisfy the processing execution amount determined by the execution amount determination unit 24.

As described in the above example, suppose that the command for repeating the processing for "moving the focus to the 'left' by one object" for 30 times is input from the gesture recognition apparatus 1 into the display apparatus 2 (i.e., digital television set 100). In this case, the object processing unit 25 changes the focus of the object currently in focus, among the objects displayed as the list, to an object that is 30 objects to the left of the object currently in focus. Then, the object processing unit 25 moves the cursor to the left by 30 objects. Alternatively, when the object is a page of a book, the object processing unit 25 changes the focus to a page 30 pages ahead, turns the page 30 times, and displays the page in question (when the book is bound on the right side and is opened to the left side).

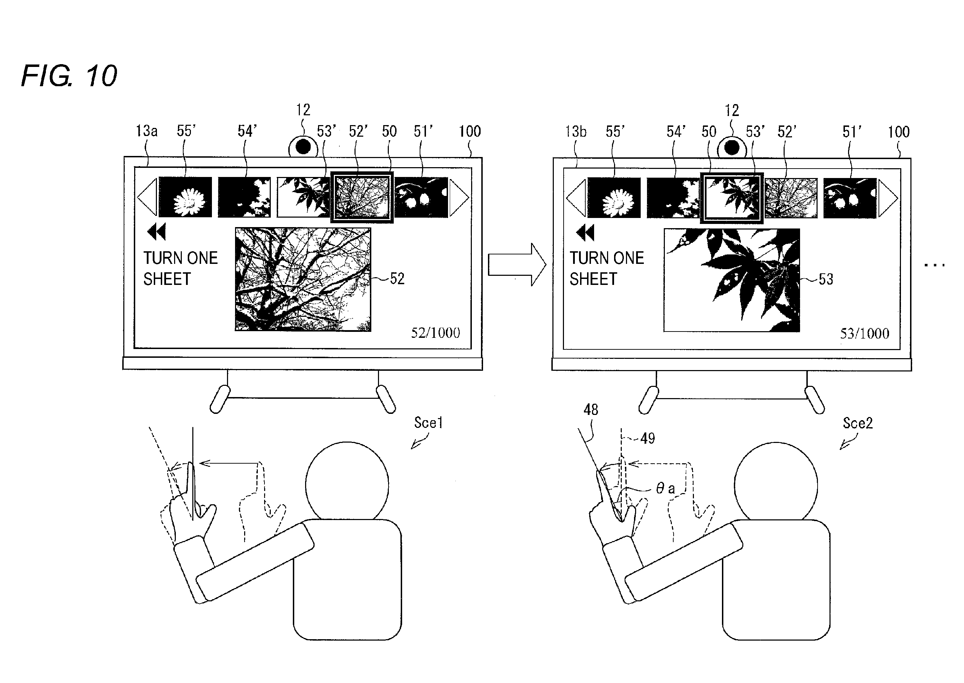

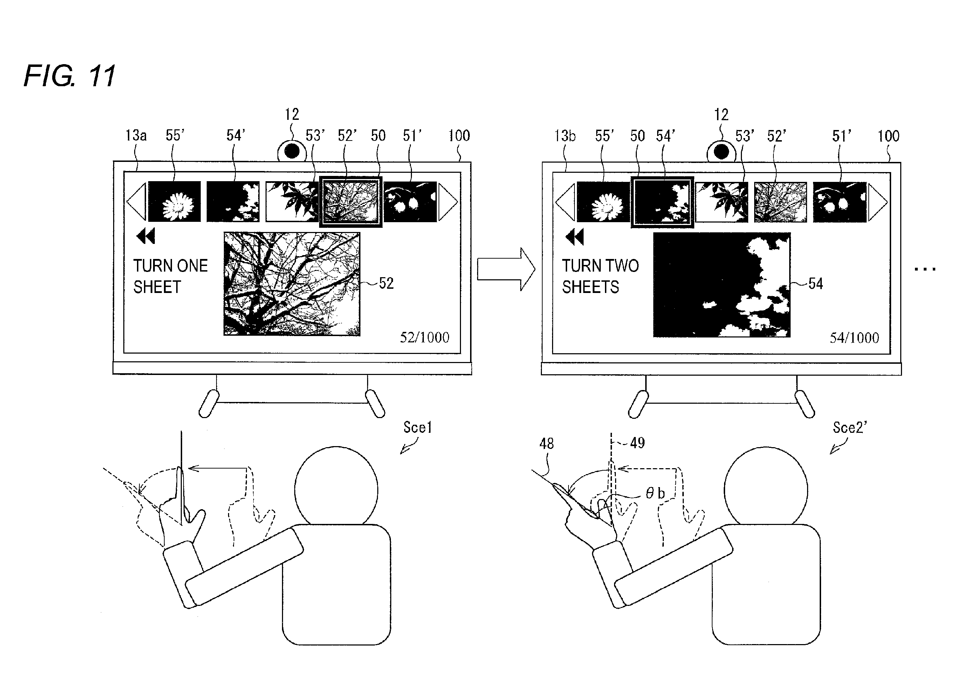

FIGS. 10 and 11 are figures illustrating a specific example of a display screen obtained as a result of execution of processing by the object processing unit 25 in accordance with the gesture recognized by the gesture recognition apparatus 1.

In the example as shown in FIGS. 10 and 11, for example, the object processing unit 25 displays thumbnail images of still pictures stored in the object storage unit 32 at the upper side of the display screen (13a, 13b) as a list (thumbnail images 51' to 55'). Further, the object processing unit 25 displays the still picture corresponding to the focused thumbnail image of the thumbnail images displayed as the list, at the lower side of the display screen (13a, 13b). For example, the focus is given to the thumbnail image 52' in the display screen 13a of FIG. 10, and accordingly, a still picture 52 corresponding to the thumbnail image 52' is displayed at the lower side. Further, the object processing unit 25 displays a cursor 50 at a position of the focused thumbnail image, in order to clearly indicate the focused thumbnail image.

For example, suppose that, when the thumbnail image 51' is in the focused state in the display screen of the display unit 13, the user inputs gesture by moving the finger to the left (Sce1 of FIG. 10; scene 1). In this case, the gesture recognition unit 22 recognizes the gesture "move to the left", and commands the object processing unit 25 to perform the corresponding processing for "moving the focus to the 'left' by one object".

As shown in the display screen 13a, the object processing unit 25 moves the focus to the thumbnail image 52' at the left of the thumbnail image 51', in accordance with the command from the gesture recognition unit 22. Then, in the present embodiment, further, the object processing unit 25 moves the cursor 50 to the left from the thumbnail image 51' and applies the cursor to the thumbnail image 52'. Further, the still picture 52 corresponding to the thumbnail image 52' is displayed at the lower side.

After the user finishes moving the finger, the user subsequently changes the form of the finger. More specifically, the inclination of the finger is changed to the left by a predetermined angle (Sce 2 of FIG. 10; scene 2). The form monitoring unit 23 monitors how the finger is inclined, and successively obtains the inclination of the finger. For example, at the time point of the scene 2, the form monitoring unit 23 identifies the angle θa between the reference line 49 and the principal axis 48 of the finger, as the inclination of the finger at the time point of the scene 2 (the amount of change of the form).

For example, the execution amount determination unit 24 determines that the processing execution amount of the angle θa is "one sheet", in accordance with the angle θa and information about the correlation stored in the form correlation storage unit 31. In this case, the movement of the finger and the form change are executed in the left direction. Accordingly, at the time point of the scene 2, the execution amount determination unit 24 gives the processing execution amount "one sheet" and the processing movement direction "left" to the object processing unit 25 as a command.

The object processing unit 25 repeats the processing previously commanded by the gesture recognition unit 22, in accordance with the command from the execution amount determination unit 24. More specifically, the object processing unit 25 moves the focus to the "left" by one object again. As a result, as shown in the display screen 13b, the object processing unit 25 moves the focus from the thumbnail image 52' to the thumbnail image 53', and also moves the cursor 50 to the left by one.

In this case, when the user continues operation for inclining the finger with still the angle of θa, the execution amount determination unit 24 successively gives the processing execution amount "one sheet" and processing movement direction "left" to the obj ect processing unit 25 as a command.

While the above command is provided, the object processing unit 25 continuously executes processing for moving the focus from the thumbnail image 53' to 54', 55,'..., i.e., one sheet forward. In this case, the cursor 50 is also moved from the thumbnail image 53' to 54', 55,'..., one by one.

On the other hand, as shown in FIG. 11, subsequent to the same scene 1 (Sce 1 of FIG. 11) as FIG. 10, the user inclines the finger with the angle θb this time (Sce 2 of FIG. 11'). θb of the scene 2' (Sce2') is an angle larger than θa of the scene 2 (Sce 2 of FIG. 10). Accordingly, the execution amount determination unit 24 determines that the processing execution amount corresponding to the angle θb is "two sheets", and that the processing movement direction is "left".

When this scene 2' is continued, the execution amount determination unit 24 continuously gives the processing execution amount "two sheets" and processing movement direction "left" to the object processing unit 25 as a command.

In this case, as shown in the display screen 13b, while the command is given, the object processing unit 25 changes the focus from the thumbnail image 52' to the thumbnail image 54', which is two sheets forward. Then, the object processing unit 25 continues this processing while the command is provided. More specifically, the object processing unit 25 continuously changes the focus to thumbnail images 56', 58', 60', ..., not shown, which is two sheets forward.

It should be noted that when the inclination of the finger further increases from θb, the execution amount determination unit 24 successively determines the processing execution amount as "3 sheets", "4 sheets", .... When a new processing execution amount is provided from the execution amount determination unit 24, the object processing unit 25 can change the focus at a higher speed such as three sheets forward, four sheets forward, ..., in accordance with the processing execution amount. It should be noted that the above "one sheet forward" means that the focus is changed by one object. "Two sheets forward" means that the focus is changed by two objects, skipping one object. "Three sheets forward (four sheets forward)" respectively means that the focus is changed by three (four) objects, skipping two (three) objects. The object processing unit 25 is configured to be able to change the focus by any number of objects. For example, when one thousand objects are displayed as a list, the object processing unit 25 can also change the focus by one hundred objects.

According to the above configuration, the user can easily input the command equivalent to input of gestures repeatedly made for many times into the digital television set 100, only by inputting gesture by moving the command body and changing the form of the command body.

For example, in the past, when a user wants to move the cursor to the left for ten times, the user has to perform operation for moving the command body to the left for ten times, but according to the gesture recognition apparatus 1 of the at least one embodiment of the present invention, the user can do it by performing only one operation for moving the command body to the left and performing only one operation for inclining the command body.

Further, the user can specify the amount of repetition to the digital television set 100, by adjusting the amount of change of the command body. For example, when the amount of change of the form of the command body (the inclination of the finger) is increased ten times, the user can command the digital television set 100 to move the cursor by 100 sheets, not by 10 sheets.

[Processing flow]

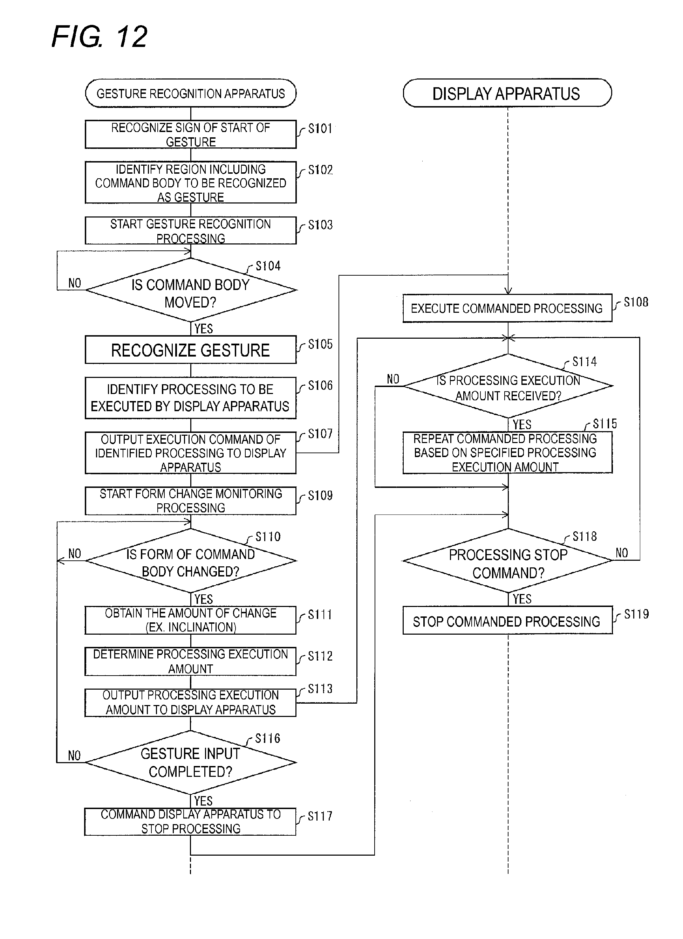

FIG. 12 is a flowchart illustrating a flow of object processing executed by the display apparatus 2 (digital television set 100) and gesture recognition processing executed by the gesture recognition apparatus 1.

In order to input gesture, first, the user sends a sign of gesture input start by, e.g., performing operation of waving a finger in front of the image-capturing unit 12.

When a motion picture (frame group) obtained by capturing an image of this sign is provided to the gesture recognition apparatus 1, the start recognizing unit 20 recognizes the sign of gesture input start, on the basis of the amount of change between frames (S101). Subsequently, the start recognizing unit 20 identifies a region including the command body for inputting gesture (for example, command body inclusion region 40) from the frame (S102).

In this case, subsequently, the command body detection unit 21 preferably detects the command body region 41 from the command body inclusion region 40, and further, preferably detects the command body reference point 42 on the command body region 41.

Then, the gesture recognition unit 22 tracks the command body to start gesture recognition processing (S103) . For example, it is preferable to track the command body reference point 42 detected by the command body detection unit 21.

In the present embodiment, the user moves the command body (finger) in any direction, i.e., any one of the upper side, lower side, left, and right, to input desired gesture. When a motion picture (frame group) obtained by capturing this is provided to the gesture recognition apparatus 1, the gesture recognition unit 22 obtains the movement direction and the displacement of the command body reference point 42 from the inter-frame difference. The displacement is accumulated by successively providing the frames. When the displacement is equal to or more than a certain level, the gesture recognition unit 22 recognizes that the command body "has been moved". When the gesture recognition unit 22 recognizes the movement of the command body (YES in S104), the gesture recognition unit 22 recognize the gesture on the basis of the movement direction of the command body reference point 42 obtained as a result of tracking of the command body reference point 42 (S105). For example, as shown in FIG. 5, when the command body reference point 42 moves in the movement direction 43, the gesture recognition unit 22 recognizes input of the gesture "move to the left" as shown in FIG. 6. Subsequently, the gesture recognition unit 22 identifies processing to be executed by the display apparatus 2 in accordance with the input gesture (S106). For example, in accordance with the gesture rule as shown in FIG. 6, the processing for "moving the focus to the 'left' by one object" associated with "move to the left" is identified as the processing executed by the display apparatus 2. The gesture recognition unit 22 outputs the command, which causes the display apparatus 2 to execute the identified processing, to the display apparatus 2 (in this case, object processing unit 25) (S107).

In contrast, the object processing unit 25 of the display apparatus 2 executes the commanded processing in accordance with the command (S108). In the above example, the object processing unit 25 changes the focus to an object displayed at the left of the object which used to be focused on. The object processing unit 25 also moves the cursor, which used to be applied to the focused object until then, to the left object newly focused.

On the other hand, in the present embodiment, when the user finishes input of the gesture, and the user wants to repeat processing performed by the apparatus on the gesture, the user performs operation for continuously executing the processing, using the command body (in this case, for example, finger). When a motion picture (frame group) obtained by capturing this is provided to the gesture recognition apparatus 1, the form monitoring unit 23 of the gesture recognition apparatus 1 monitors the form of the command body of which image is captured by processing frames continuously provided as necessary (S109). The form monitoring unit 23 monitors the form of the command body region 41 (finger) in the command body inclusion region 40 identified in each upstream step. In this case, for example, the form monitoring unit 23 further identifies the region in question 45 including a portion of protruding finger from the command body region 41, and identifies the principal axis 48 of the finger in the region in question 45. Then, the inclination of the principal axis 48 of the finger is tracked.

When the form monitoring unit 23 accumulates the inter-frame difference value, and recognizes the movement of the command body (i.e., change of the form) (YES in S110), the form monitoring unit 23 obtains the inclination of the finger in the region in question 45 in the latest frame (S111). For example, the form monitoring unit 23 obtains, as the inclination of the finger, the angle formed between the principal axis 48 and the reference line 49 which is vertical in the frame.

Subsequently, the execution amount determination unit 24 determines the processing execution amount, on the basis of the inclination of the finger obtained by the form monitoring unit 23, in accordance with information about correlation stored in the form correlation storage unit 31. The information about the correlation is information indicating correlation between the processing execution amount and the amount of change of the form, and the processing execution amount corresponding to the inclination of the finger obtained by the form monitoring unit 23 is obtained from this information.

For example, the execution amount determination unit 24 obtains the processing execution amount Mt as being "30 times", on the basis of the fact that the amount of change of the form $\theta t$ is 60 degrees, in accordance with calculation expression, "Mt = 0.5 (times) $\times$ $\theta t$" (information about the correlation).

Subsequently, the execution amount determination unit 24 outputs the processing execution amount "30 times" determined in S112 to the display apparatus 2 (S113).

In contrast, when the object processing unit 25 of the display apparatus 2 receives the processing execution amount from the gesture recognition apparatus 1 (YES in S114), the processing commanded in S108 is executed for the number of times specified by the processing execution amount (S115). In the above example, the object processing unit 25 executes the processing for "moving the focus to the 'left' by one object" for 30 times. Further, the object processing unit 25 may move the cursor to the 30th object in the left direction. In this case, the object processing unit 25 may move the cursor applying the cursor to each object one by one, but it is preferable to move the cursor to the 30th object in the left direction at once (jump to the 30th object in the left direction).

When the user wants to further increase the moving speed of the cursor, the inclination of the finger may be increased. While the command body is considered to be within a frame (NO in S116), processing of S110 to S115 is repeatedly executed. More specifically, the object processing unit 25 repeats processing for jumping the cursor to every 30th object in the left direction.

Alternatively, when the user wants to finish movement (repetition) of the cursor, the user can complete input of the gesture by moving the command body itself out of the image-capturing range of the image-capturing unit 12. When the command body is no longer recognized in the frames provided by the image-capturing unit 12 (YES in S116), the form monitoring unit 23 finishes monitoring of the form, and stops the form change amount (the inclination of the finger) that was provided to the execution amount determination unit 24. In accordance with this, the execution amount determination unit 24 stops the processing execution amount that was provided to the display apparatus 2, and instead, the display apparatus 2 is commanded to stop execution of the processing (S117).

In contrast, when the object processing unit 25 of the display apparatus 2 receives the processing stop command from the gesture recognition apparatus 1 (YES in S118), the processing commanded in S108 is stopped (S119). More specifically, the object processing unit 25 stops the movement of the cursor (transition of the focus).

According to the above method, the user can easily input the command equivalent to input of gestures repeatedly made for many times into the digital television set 100, only by inputting gesture by moving the command body and changing the form of the command body.

For example, in the past, when a user wants to move the cursor to the left for ten times, the user has to perform operation for moving the command body to the left for ten times, but according to the gesture recognition apparatus 1 of the at least one embodiment of the present invention, the user can do it by performing only one operation for moving the command body to the left and performing only one operation for inclining the command body.

Further, the user can specify the amount of repetition (processing execution amount) to the digital television set 100, by adjusting the amount of change of the command body. For example, when the amount of change of the command body (the inclination of the finger) is increased ten times, the user can command the digital television set 100 to move the cursor by 100 sheets, not by 10 sheets.

«Modification»

[About processing execution amount determining method]

In the above embodiment, as shown in FIG. 9, the form monitoring unit 23 is configured to compare the absolute reference form (vertical reference line 49 where $\theta s = 0$ degrees) and the form at the current time point t (principal axis 48) to obtain the form change amount $\theta t$) of the command body at the current time point t. The execution amount determination unit 24 is configured to determine the processing execution amount in accordance with Mt = $\alpha \times \theta t$ (where a is a constant).

However, the form monitoring unit 23 and the execution amount determination unit 24 may be configured as follows, and may determine the processing execution amount in accordance with other methods. Another processing execution amount determining method of the at least one embodiment of the present invention will be explained with reference to FIGS. 13 to 15.

FIG. 13 is a figure for explaining a processing execution amount determining method according to another embodiment of the present invention.

In the modification as shown in FIG. 13, the display apparatus 2 is configured such that the maximum value of the processing execution amount is defined in advance. For example, in the object processing unit 25 of the display apparatus 2, the maximum value of the number of objects by which the cursor is jumped is defined as "100". More specifically, the object processing unit 25 is configured to be able to move the cursor (focus) to upper, lower, right, and left sides, by every 100 objects at most.

Like the first embodiment, the form monitoring unit 23 defines a reference line 49, obtains the amount of change $\theta t$ at the current time point t, and provides it to the execution amount determination unit 24.

In the present modification, as shown in FIG. 13, the execution amount determination unit 24 further defines, as a horizontal reference line 70, a reference form (ultimate form e) corresponding to the maximum value (for example, 100) of the processing execution amount defined in advance. The execution amount determination unit 24 deems that the reference form corresponding to the minimum value (for example, 0) of the processing execution amount $\theta s$ is 0 degrees (vertical reference line 49). The execution amount determination unit 24 deems that the reference form (ultimate form e) corresponding to the maximum value (for example, 100) of the processing execution amount $\theta e$ is 90 degrees (horizontal reference line 70). Then, the execution amount determination unit 24 obtains the maximum amount of change ($\theta e - \theta s = \theta all = 90$ degrees), on the basis of $\theta s$ of the vertical reference line 49 which is 0

degrees and $\theta e$ of the horizontal reference line 70 which is 90 degrees.

In the present modification, the execution amount determination unit 24 obtains a ratio of the form change amount ($\theta t$) at the current time point t to the maximum amount of change ($\theta all = 90$ degrees). Then, the execution amount determination unit 24 determines the processing execution amount in proportional to the magnitude of this ratio.

For example, in accordance with the predetermined calculation expression below stored in the form correlation storage unit 31, the execution amount determination unit 24 determines a processing execution amount Mt at the time point t from the inclination of the finger $\theta t$.

$$Mt = (\theta t \div \theta all) \times \beta$$

In this case, $\beta$ is the maximum processing execution amount defined in advance. In the above example, $\beta = 100$ (pieces). Therefore, more specifically, when the inclination of the finger $\theta t$ of the time point t obtained by the form monitoring unit 23 is 45 degrees, the execution amount determination unit 24 determines that the processing execution amount Mt is ($45 \div 90$) $\times$ 100 = 50 times.

Even in the above configuration, the execution amount determination unit 24 can determine the processing execution amount in proportional to the amount of change of the form of the command body obtained by the form monitoring unit 23, and can achieve the same effects as those of the first embodiment.

FIG. 14 is a figure for explaining a processing execution amount determining method according to another embodiment of the present invention.

In the modification as shown in FIG. 14, the features different from the processing execution amount determining method according to the first embodiment as shown in FIG. 9 are as follows. More specifically, the form monitoring unit 23 is configured to define the vertical line in the frame as an absolute reference line. In the present modification, the form monitoring unit 23 deems that the form of the command body at the time point at which monitoring of the form change of the command body is started is a reference form (start form s). Therefore, even when the user's finger is already inclined at the time point at which the gesture input is completed, and the form monitoring unit 23 starts monitoring at that moment, the principal axis of the finger at that time point is defined as the reference line 49'. The form monitoring unit 23 defines that the inclination $\theta s$ of the reference line 49' defined as 0 degrees.

The form monitoring unit 23 obtains the principal axis 48 of the finger at the current time point t, and provides the angle $\theta t$ between the reference line 49' and the principal axis 48 to the execution amount determination unit 24, as the amount of change of the form of the command body at the current time point t.

Like the first embodiment, the execution amount determination unit 24 may determine the processing execution amount, in accordance with information about correlation stored in the form correlation storage unit 31 ($Mt = \alpha \times \theta t$). The coefficient $\alpha$ may be the same as that of the first embodiment, or another value may be set.

Even in the above configuration, the execution amount determination unit 24 can determine the processing execution amount in proportional to the amount of change of the form of the command body obtained by the form monitoring unit 23, and can achieve the same effects as those of the first embodiment.

FIG. 15 is a figure for explaining a processing execution amount determining method according to another embodiment of the present invention.

In the modification as shown in FIG. 15, as described above, the display apparatus 2 is configured such that the maximum value of the processing execution amount is defined in advance. For example, the maximum value of the number of objects by which the cursor can be jumped by the object processing unit 25 is defined as "100".

Like the first embodiment, the present modification is configured such that the form monitoring unit 23 defines a vertical reference line 49 in a frame, and defines the inclination $\theta$ of the reference line 49 inclination $\theta$ as being 0 degrees. In the present modification, however, the form monitoring unit 23 further deems that the form of the command body at the time point at which monitoring of the form change of the command body is started is a reference form (start form s). The form monitoring unit 23 defines that the principal axis of the finger at the start form s is a reference line 49'.

The form monitoring unit 23 obtains the principal axis 48 of the finger at the current time point t, and provides the angle $\theta t$ between the reference line 49' and the principal axis 48 to the execution amount determination unit 24, as the amount of change of the form of the command body at the current time point t.

In the present modification, as shown in FIG. 15, the execution amount determination unit 24 further defines, as a horizontal reference line 70, a reference form (ultimate form e) corresponding to the maximum value (for example, 100) of the processing execution amount defined in advance. In the present modification, the execution amount determination unit 24 deems that the reference form corresponding to the minimum value (for example, 0) of the processing execution amount is a reference line 49' ($\theta s$) corresponding to the start form s. The execution amount determination unit 24 deems that the reference form (ultimate form e) corresponding to the maximum value (for example, 100) of the processing execution amount $\theta e$ is 90 degrees (horizontal reference line 70). Then, the execution amount determination unit 24 obtains the maximum amount of change ($\theta e - \theta s$

= $\theta all$), on the basis of $\theta s$ of the reference line 49' and $\theta e$ of the horizontal reference line 70 which is 90 degrees. In this case, $\theta s$ is obtained from the angle between the reference line 49' of the start form s and the vertical reference line 49.

In the present modification, the execution amount determination unit 24 obtains a ratio of the form change amount ($\theta t$) at the current time point t to the maximum amount of change ($\theta all$). Then, the execution amount determination unit 24 determines the processing execution amount in proportional to the magnitude of this ratio.

For example, in accordance with the predetermined calculation expression below stored in the form correlation storage unit 31, the execution amount determination unit 24 determines a processing execution amount Mt at the time point t from the inclination of the finger $\theta t$.

$$Mt = (\theta t \div \theta all) \times \beta$$

In this case, $\beta$ is the maximum processing execution amount defined in advance. In the above example, $\beta$ = 100 (pieces). Therefore, more specifically, when $\theta s$ is 30 degrees, $\theta all$ is 60 degrees, and the inclination of the finger $\theta t$ of the time point t obtained by the form monitoring unit 23 is 15 degrees, the execution amount determination unit 24 determines that the processing execution amount Mt is (15 ÷ 60) × 100 = 25 times.

Even in the above configuration, the execution amount determination unit 24 can determine the processing execution amount in proportional to the amount of change of the form of the command body obtained by the form monitoring unit 23, and can achieve the same effects as those of the first embodiment.

[Consideration of movement direction of the form change with respect to movement direction during gesture input]

In the above embodiment, the movement direction of the command body (finger) during gesture input and the movement direction of the form change of the command body when the processing execution amount is specified are considered to be the same, and be in a certain direction at all times. For example, a case where the finger moves to the left during gesture input is a case where the finger thereafter continuously inclines in the left direction.

However, the user may change the form of the command body in a movement direction opposite to the movement direction of the command body (finger) during gesture input.

(Case 1)

A configuration corresponding to such situation is as follows. When the execution amount determination unit 24 compares the form change amount $\theta t$ at the current time point t provided from the form monitoring unit 23 with the amount of change $\theta t - 1$ at the time point t - 1 immediately before, and finds that the form change amount $\theta t$ decreases therefrom, this may be recognized as a stop command given by the user. Then, the execution amount determination unit 24 may output, to the display apparatus 2, a processing stop command for commanding stop of execution of processing.

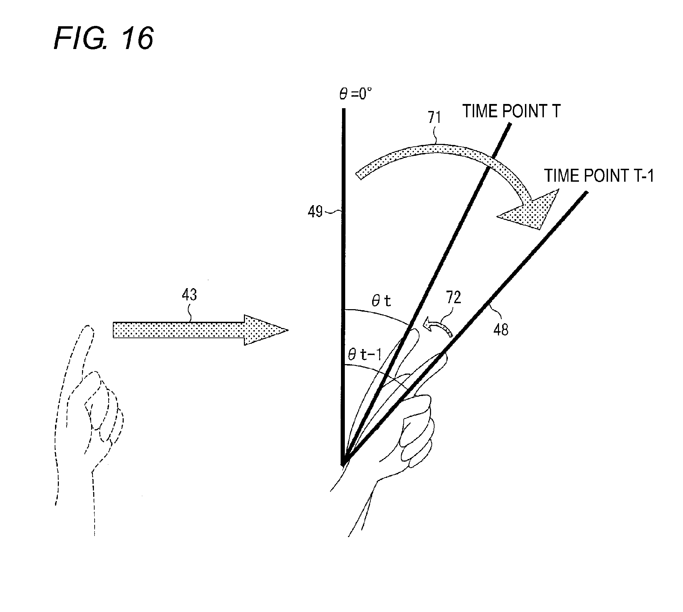

FIG. 16 shows an example of situation where, when the form change amount $\theta t$ at the current time point t is compared with the amount of change $\theta t - 1$ at the time point t - 1 immediately before, the form change amount $\theta t$ is less than the amount of change $\theta t - 1$.

As shown in FIG. 16, the movement direction during gesture input is the movement direction 43 (move to the left), and the movement direction of the form change of the command body when the processing execution amount is specified is also a movement direction 71, which is left direction, like the movement direction 43. In this case, the inclination of the finger (form change amount) increases as it inclines to the left with respect to the reference line 49.

Therefore, when the user returns the inclination of the finger in a movement direction 72 (right direction) opposite to the movement direction 71 (movement direction 43) even a little bit, the inclination of the finger (form change amount) decreases more greatly than the amount of change $\theta t - 1$ immediately before.

As described above, the digital television set 100 is configured to stop processing that has been performed continuously until then, when operation is performed to return the inclination of the finger back to the direction (right) opposite to the movement direction (left) until then.

Until then, the user performs operation to move the cursor (focus) in the same direction as the movement direction of the finger. In this case, the operation for returning the inclination of the finger back to the direction opposite to the movement direction is often considered by the user to be applying brake to the movement of the cursor.

Therefore, according to the above configuration, the user can intuitively understand the operation, and there is an advantage in that operability is improved in the digital television set 100.

(Case 2)

Alternatively, under the above circumstances, the inclination of the finger (form change amount) may incline to the right with respect to the reference line 49 (more specifically, the opposite direction to the movement direction 43).

As the configuration for coping with such circumstances, the form monitoring unit 23 may represent the amount of change of the command body using a negative number when the command body (finger) inclines in a direction opposite to the movement direction from the reference line 49.

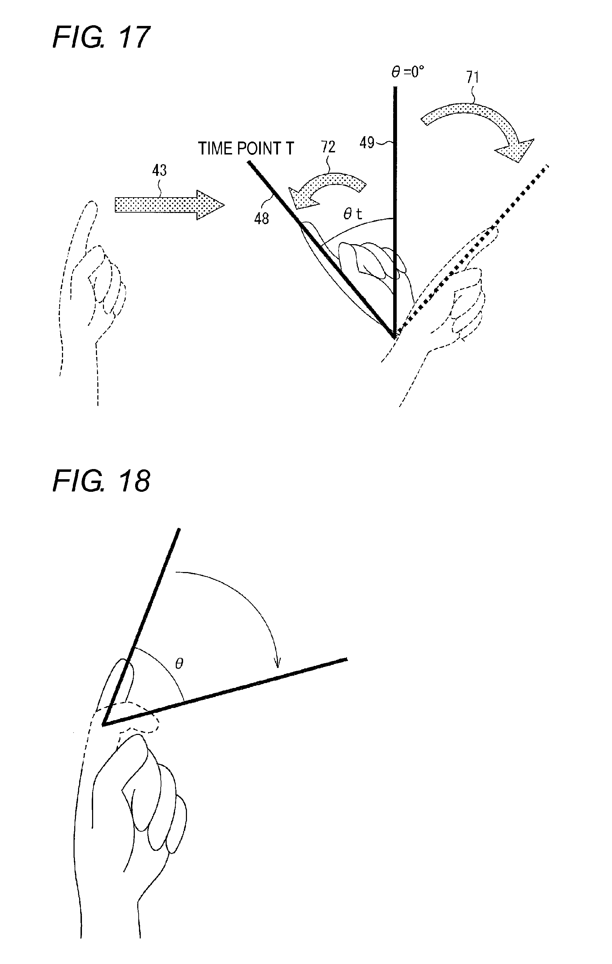

For example, as shown in FIG. 17, suppose that the movement direction during gesture input is the movement direction 43 (move to the left), and the movement direction of the form change of the command body during specification of the processing execution amount is the movement direction 72 of the right direction opposite to the movement direction 43. In this case, as the inclination of the finger (form change amount) inclines to the right from the reference line 49, it becomes negative and decreases (the absolute value thereof increases).

When the form change amount provided by the form monitoring unit 23 is a positive number, the execution amount determination unit 24 determines that the same direction as the previous movement direction 43 is the movement direction of the processing executed by the digital television set 100. More specifically, the execution amount determination unit 24 commands the display apparatus 2 to perform processing of "moving the focus to the left by every Mt objects".

On the other hand, when the form change amount provided by the form monitoring unit 23 is a negative number, the execution amount determination unit 24 determines that the same direction opposite to the previous movement direction 43 is the movement direction of the processing executed by the digital television set 100. More specifically, the execution amount determination unit 24 commands the display apparatus 2 to perform processing of "moving the focus to the right by every Mt objects".

Naturally, the processing execution amount Mt is determined in accordance with how much the principal axis 48 of the finger at the current time point t is inclined to the left (or right) from the reference line 49. The more the inclination is, the higher the processing execution amount is.

As described above, the digital television set 100 is configured to continue processing in the movement direction opposite to the movement direction of the processing performed until then, when operation is performed to incline the finger to the direction (right) opposite to the movement direction (left) until then.

In this case, the operation for inclining the finger in the movement direction opposite to the movement direction is often considered by the user to be changing the movement direction of the cursor in a direction opposite to the movement direction commanded by the first gesture (the cursor returns back).

Therefore, according to the above configuration, the user can intuitively understand the operation, and there is an advantage in that operability is improved in the digital television set 100.

[Form change monitoring target]

In the above embodiment, the form monitoring unit 23 is configured to adopt the inclination of the finger as the monitoring target, as the form of the command body. However, the configuration of the gesture recognition apparatus 1 of the at least one embodiment of the present invention is not limited thereto.

For example, the form monitoring unit 23 may also adopt, as the monitoring target, how much the finger is bent in the command body that is moved for gesture input.

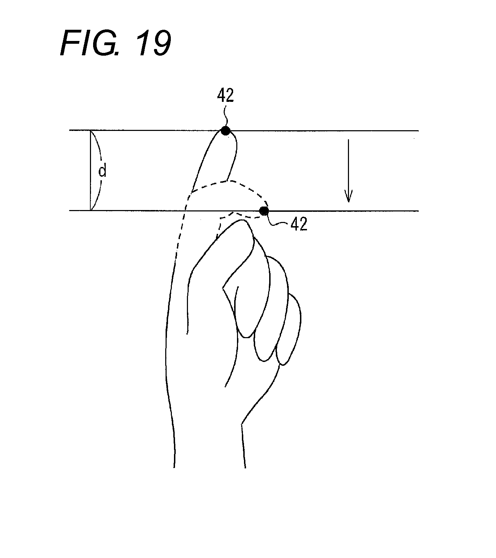

More specifically, as shown in FIG. 18, the form monitoring unit 23 may monitor the inclination by obtaining the principal axis at a portion where the angle changes when the finger is bent (middle joint), and may obtain, as the form change amount, the magnitude of the angle θ of the middle joint that changes when the finger is bent. Alternatively, as shown in FIG. 19, the form monitoring unit 23 monitors a Y coordinate of a finger tip (command body reference point 42) in a frame, and may obtain, as the form change amount, a displacement d obtained from a Y coordinate difference with regard to the Y coordinate of the command body reference point 42 that changes when the finger is bent.

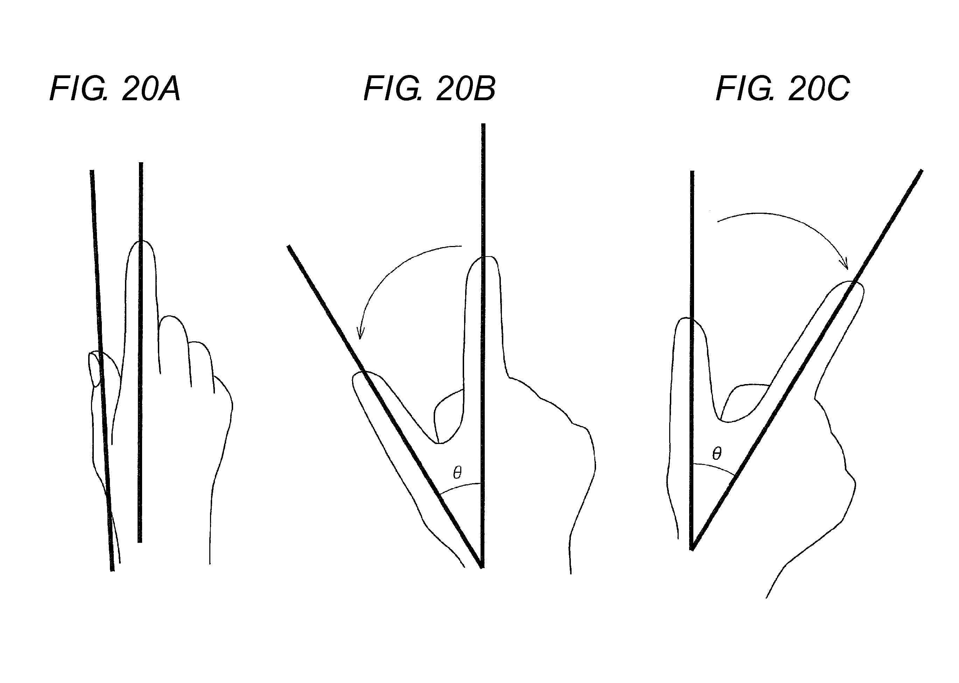

Alternatively, for example, the form monitoring unit 23 may obtain, as the form change amount, an angle θ between two fingers of the command body that has moved for gesture input. FIG. 20A is a figure illustrating a command body at a time point when gesture input is completed. The two fingers referred to herein mean a thumb and an index finger. The form monitoring unit 23 obtains the principal axis of each finger, and obtains the angle between these principal axes. At the time point when the gesture input is completed, the angle θ (not shown in FIG. 20A) is small. FIGS 20B and 20C are figures illustrating the command body at a certain time point when the processing execution amount specification operation is performed. The angle θ between the two fingers is more than that of FIG. 20A. The execution amount determination unit 24 determines the processing execution amount in accordance with information about correlation, i.e., as the angle between the two fingers increases, the processing execution amount increases.

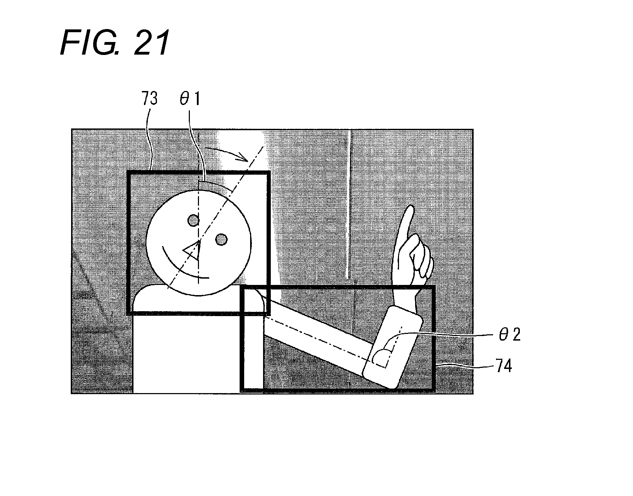

Alternatively, within a frame, the form monitoring unit 23 may identify a second command body which is separate from the command body that has moved for gesture input, and may monitor the form change amount of the second command body. More specifically, as shown in FIG. 21, the form monitoring unit 23 may adopt, as the monitoring target, how much the user tilts his/her head. The form monitoring unit 23 identifies the command body inclusion region 73 including the face of the user. Then, the form monitoring unit 23 may obtain the principal axis of the face on the basis of the ridge of the nose, and may obtain the amount of change θ1 of the inclination of the face as the form change amount. Alternatively, the form monitoring unit 23 may adopt how much the user bends his/her arm as the monitoring target. The form monitoring unit 23 identifies the command body inclusion region 74 including the arm. Then, the form monitoring unit 23 may obtain the principal axes of an upper arm portion and a forearm portion of the user, and may obtain the angle θ2 between these principal axes as the form change amount.

«Example of application»

In the explanation about the above embodiments, as shown in FIGS. 10 and 11, for example, the gesture recognition apparatus 1 of the at least one embodiment of the present invention is provided in the digital television set 100 serving as the display apparatus 2 which is processing execution entity. The gesture recognition apparatus 1 of the at least one embodiment of the present invention can be provided not only in the digital television set 100 but also in any other display apparatuses.

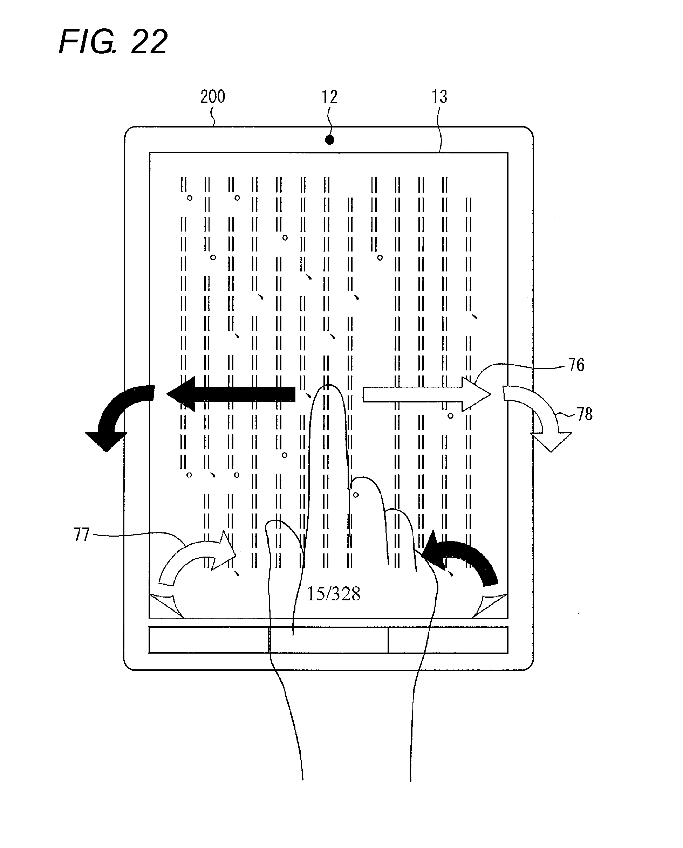

For example, as shown in FIG. 22, the gesture recognition apparatus 1 of the at least one embodiment of the present invention can be implemented on an electronic book reader 200. The object processing unit 25 of the electronic book reader 200 causes the display unit 13 to display a focused page of pages of an electronic book. For example, the object processing unit 25 displays an electronic book as an image of a book which is bound on the right side and is opened to the left side. In the electronic book reader 200, the gesture recognition apparatus 1 is an element for recognizing gesture for turning pages.

In order to display a subsequent page, the user performs operation to turn the currently displayed page from the left to the right. Like the first embodiment, the user moves the command body from the left to the right in front of the image-capturing unit 12 (white arrow 76). When the gesture recognition unit 22 recognizes the gesture of "moving to the right", the object processing unit 25 changes the focus to a page (page 16) subsequent to the current page (page15), and displays page16 (white arrow 77). Further, when the form monitoring unit 23 recognizes the inclination of the finger in the right direction (white arrow 78), the object processing unit 25 moves the focus forward from the current page (page16) by the specified processing execution amount (page number), and displays the new page. A black arrow indicates movement opposite to what has been explained above.

As described above, the user can turn many pages at a time with a simple operation of changing the form of the command body, without inputting the same gesture multiple times.

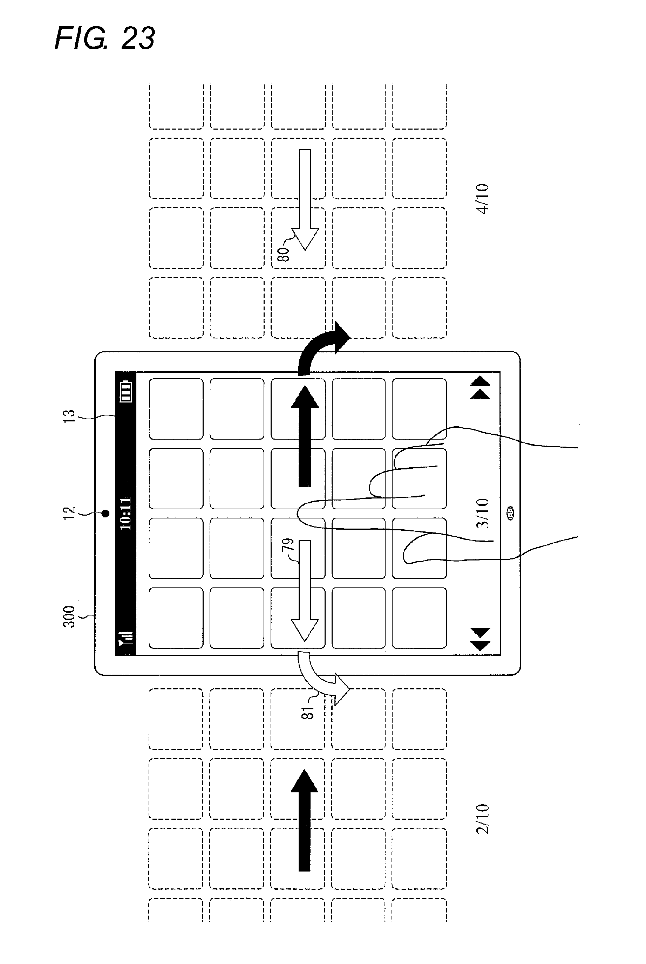

Alternatively, as shown in FIG. 23, the gesture recognition apparatus 1 of the at least one embodiment of the present invention can be implemented on a smart phone 300.

In order to display a subsequent page, the user performs operation to slide the currently displayed page from the right to the left. Like the first embodiment, the user moves the command body from the right to the left in front of the image-capturing unit 12 (white arrow 79).

When the gesture recognition unit 22 recognizes the gesture of "moving to the left", the object processing unit 25 changes the focus to a page (4/10) subsequent to the current page (3/10), and displays the page of 4/10. For example, the page of 4/10 slides inwardly (white arrow 80). Further, when the form monitoring unit 23 recognizes the inclination of the finger in the left direction (white arrow 81), the object processing unit 25 moves the focus forward from the current page (4/10) by the specified processing execution amount (page number), and displays the new page. A black arrow indicates movement opposite to what has been explained above.

As described above, the user can turn many pages at a time with a simple operation of changing the form of the command body, without inputting the same gesture multiple times.

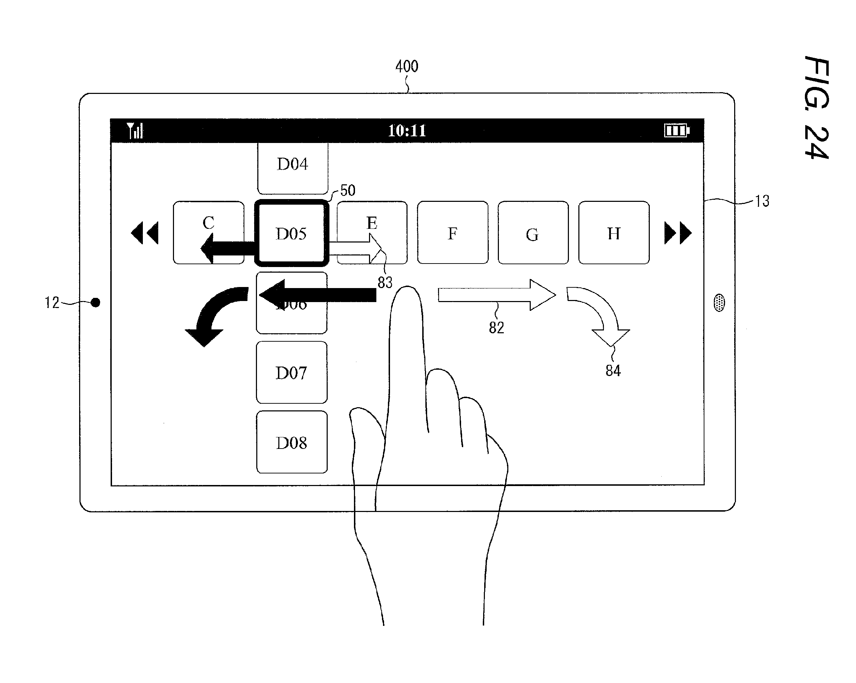

Alternatively, as shown in FIG. 24, the gesture recognition apparatus 1 of the at least one embodiment of the present invention can be implemented on a tablet PC 400.

The object processing unit 25 of tablet PC 400displays icons (options) serving as objects in such a manner that they are divided into main items and sub-items. The object processing unit 25 displays the main items (identified by alphabets in FIG. 24) as a list in a horizontal row. Then, sub-items which belong to the focused main item (identified by numerical values in FIG. 24) are displayed as a list in a vertical row. Further, the object processing unit 25 displays a cursor 50 at the focused icon.

First, the user performs operation to move the cursor 50 in order to select a desired main item. Like the first embodiment, the user moves the command body from the left to the right in front of the image- capturing unit 12 (white arrow 82) . When the gesture recognition unit 22 recognizes the gesture of "moving to the right", the object processing unit 25 changes the focus to an icon (high- level item E) at the right of a current icon (high-level item D), and also moves the cursor 50 to the right (white arrow 83) . Further, when the form monitoring unit 23 recognizes the inclination of the finger in the right direction (white arrow 84), the object processing unit 25 moves the focus to an icon arranged at the right of the current icon (high- level item E) by the specified processing execution amount (the number of icons), and applies the cursor 50 to the new icon and displays it. A black arrow indicates movement when the right and the left are opposite to what has been explained above.

As described above, the user can quickly select an icon arranged far from the current focus position with a simple operation of changing the form of the command body, without inputting the same gesture multiple times.

The present invention is not limited to each embodiment explained above. The present invention can be changed in various manners within the scope described in claims. The technical scope of the present invention also includes embodiments obtained by appropriately combining technical means disclosed in each of the different embodiments.

[Example of achievement with software]

Finally, in the gesture recognition apparatus 1, each block, i.e., in particular, the start recognizing unit 20, the command body detection unit 21, the gesture recognition unit 22, the form monitoring unit 23, and the execution amount determination unit 24 may be constituted by either hardware logic or may be achieved with software using a CPU as explained below.

More specifically, the gesture recognition apparatus 1 includes a CPU (central processing unit) executing commands of a control program achieving each function and a storage device (recording medium) such as a memory storing the program and various kinds of data such as a ROM (read only memory) storing the program a RAM (random access memory) in which the program is extracted. Further, an object of the at least one embodiment of the present invention can also be achieved by providing the gesture recognition apparatus 1 with a recording medium which records program codes of the control program of the gesture recognition apparatus 1 which is software achieving the above functions (execution format program, intermediate code program, source program) in a computer-readable manner, and by causing the computer (or a CPU or an MPU) to read and execute the program codes recorded in the recording medium.

Examples of recording media include a tape system such as a magnetic tape and a cassette tape, a disk system including a magnetic disk such as a floppy (registered trademark) disk/a hard disk and an optical disk such as CD- ROM/MO/MD/DVD/CD- R, a card system such as an IC card (including a memory card) /an optical card, and a semiconductor memory system such as a mask ROM/ EPROM/ EEPROM/ flash ROM.

Alternatively, the gesture recognition apparatus 1 may be configured to be able to connect to a communication network, and the program codes may be provided via the communication network. This communication network is not particularly limited. For example, the Internet, an intranet, an extranet, LAN, ISDN, VAN, CATV communication network, virtual private network, telephone network, mobile communication network, satellite communication network, and the like can be used as the communication network. A transmission medium constituting the communication network is not particularly limited. For example, the transmission medium may be a wired medium such as IEEE1394, USB, Power Line Communications, cable TV network, telephone line, and ADSL line. Alternatively, the transmission medium may be achieved wirelessly using, e.g., infrared communication such as IrDA and a remote controller, Bluetooth (registered trademark), 802.11 wireless network, HDR (High Data Rate), cellular phone network, satellite circuit, digital terrestrial network, and the like. It should be noted that the at least one embodiment of the present invention can also be achieved with a mode of computer data embedded into a carrier wave, which is realized as electronic transmission of the above program code.

[Industrial Applicability]

The gesture recognition apparatus of the at least one embodiment of the present invention is preferably used for various kinds of electronic devices having image-capturing units for taking a picture of a command body. In particular, the gesture recognition apparatus of the at least one embodiment of the present invention is preferably used for a display apparatus. The gesture recognition apparatus of the at least one embodiment of the present invention is not limited thereto, and may be implemented, as a display apparatus serving as a processing execution entity, with a digital television set, a tablet PC (Personal Computer), a smart phone, a cellular phone, an electronic book reader, an electronic organizer, PDA (Personal Digital Assistant), a personal computer, a notebook PC, a digital camera, a digital video camera, a household game machine, a portable game machine, a digital photo frame, and the like.

**Claims**

1. A gesture recognition apparatus comprising:

   a gesture recognition part that recognizes gesture based on a trajectory of movement of a command body whose images are captured, and identifies a process corresponding to the recognized gesture as a process to be executed by a processing execution entity; and
   a processing execution amount determination part that determines a processing execution amount of the process to be executed by the processing execution entity which is identified by the gesture recognition part,
   wherein the processing execution amount determination part determines the processing execution amount based on a change of a form of the command body whose images have been captured.

2. The gesture recognition apparatus according to claim 1 further comprising a form monitoring part that identifies an amount of change of the form of the command body, from each frame of a motion picture obtained by capturing the images of the command body,
   wherein the processing execution amount determination part determines the processing execution amount in proportion to the amount of change identified by the form monitoring part.

3. The gesture recognition apparatus according to claim 2, wherein the form monitoring part identifies the amount of change by comparing a reference form of the command body determined in advance and a latest form of the command body whose images are captured.

4. The gesture recognition apparatus according to claim 2, wherein the form monitoring part identifies the amount of change by comparing a form of the command body at a time point when the gesture recognition part recognizes a gesture and a latest form of the command body whose images are captured.

5. The gesture recognition apparatus according to claim 3 or 4, wherein the processing execution amount determination part determines the processing execution amount on the basis of a ratio of an amount of change in the latest form identified by the form monitoring part to a maximum amount of change in a final reference form determined in advance corresponding to a maximum value of the processing execution amount of the processing execution entity.

6. The gesture recognition apparatus according to any one of claims 2 to 5, wherein the form monitoring part identifies, as the amount of change, an angle by which an inclination of the command body is changed.

7. The gesture recognition apparatus according to claim 6, wherein the form monitoring part identifies an amount of change of an inclination of a finger serving as the command body.

8. The gesture recognition apparatus according to any one of claims 2 to 7, wherein, when an amount of change of a latest form of the command body identified by the form monitoring part is less than an amount of change of an immediately-before form of the command body, the processing execution amount determination part determines to stop execution of the process by the processing execution entity.

9. The gesture recognition apparatus according to any one of claims 2 to 7, wherein the form monitoring part identifies, with a negative number, the amount of change of the form of the command body that changes in a movement direction opposite to a movement direction of the command body, and
   when an amount of change of a latest form of the command body identified by the form monitoring part is a negative number, the processing execution amount determination part determines a processing execution amount in the movement direction opposite to an original movement direction of the process identified by the gesture recognition part.

**10.** The gesture recognition apparatus according to any one of claims 1 to 9, wherein the processing execution amount determination part determines, as the processing execution amount, a number of times the processing execution entity executes the process identified by the gesture recognition part.

**11.** The gesture recognition apparatus according to any one of claims 1 to 9, wherein when the process identified by the gesture recognition part is a process for a focus point to be changed from any one of a plurality of options arranged in order, to another option, the processing execution amount determination part determines, as the processing execution amount, a number of options that shows how many options at intervals the focus point is moved

**12.** The gesture recognition apparatus according to claim 2, wherein the processing execution amount determination part determines the processing execution amount in proportion to an amount of change of an angle of an inclination of an finger which serves as the command body whose images are captured and is identified by the form monitoring part and when the process identified by the gesture recognition part is a process for a focus point to be changed from any one of a plurality of options arranged in order, to another option, the processing execution amount is a number of options that shows how many options at intervals the focus point is moved.

**13.** The gesture recognition apparatus according to any one of claims 1 to 12, wherein the processing execution amount determination part determines the processing execution amount on the basis of the change of the form of the command body that has started the movement.

**14.** The gesture recognition apparatus according to any one of claims 1 to 12, wherein the processing execution amount determination part determines the processing execution amount on the basis of a change of a form of a second command body whose images are captured, which is different from the command body that has started the movement.

**15.** An electronic device comprising: a gesture recognition apparatus according to any one of claims 1 to 14; an image-capturing unit for providing captured images obtained by capturing images of the command body to the gesture recognition apparatus; and a processing execution entity for executing the process identified by the gesture recognition apparatus in accordance with the processing execution amount determined by the gesture recognition apparatus.

**16.** The electronic device according to claim 15, wherein when the process identified by the gesture recognition part is a process for a focus point to be changed from any one of a plurality of options arranged in order, to another option, the processing execution amount determined by the gesture recognition apparatus is a number of options that shows how many options at intervals the focus point is moved, and the processing execution entity moves the focus point at intervals of options whose number is determined by the gesture recognition apparatus.

**17.** A gesture recognition method comprising:

a gesture recognition step that recognizes gesture based on a trajectory of movement of a command body whose images are captured, and identifies a process corresponding to the recognized gesture as a process to be executed by a processing execution entity; and
a processing execution amount determining step that determines a processing execution amount of the process to be executed by the processing execution entity which is identified by the gesture recognition step,
wherein in the processing execution amount determining step, the processing execution amount is determined based on a change of a form of the command body whose images have been captured.

**18.** A control program for causing a computer to function as each part of the gesture recognition apparatus according to any one of claims 1 to 14.

**19.** A computer-readable recording medium recorded with a control program according to claim 18.

FIG. 1

FIG. 2

FIG. 3A

FIG. 3B

## FIG. 4

## FIG. 5

## FIG. 6

| RECOGNIZED GESTURE | PROCESS TO BE EXECUTED (BY DIGITAL TELEVISION SET 100) |
|---|---|
| MOVE TO THE LEFT | MOVE FOCUS TO "LEFT" BY ONE OBJECT |
| MOVE TO THE RIGHT | MOVE FOCUS TO "RIGHT" BY ONE OBJECT |
| MOVE TO THE UPPER SIDE | MOVE FOCUS TO "UPPER SIDE" BY ONE OBJECT |
| MOVE TO THE LOWER SIDE | MOVE FOCUS TO "LOWER SIDE" BY ONE OBJECT |
| : | : |

## FIG. 7

# FIG. 8

EP 2 650 754 A2

## FIG. 9

θ s=0°

49

TIME POINT T

48

θ t

FIG. 10

# FIG. 11

TURN ONE
SHEET

52

52/1000

Sce1

TURN TWO
SHEETS

54

54/1000

Sce2'

## FIG. 12

GESTURE RECOGNITION APPARATUS

DISPLAY APPARATUS

RECOGNIZE SIGN OF START OF GESTURE ⌐ S101

IDENTIFY REGION INCLUDING COMMAND BODY TO BE RECOGNIZED AS GESTURE ⌐ S102

START GESTURE RECOGNITION PROCESSING ⌐ S103

S104
IS COMMAND BODY MOVED? — NO

EXECUTE COMMANDED PROCESSING ⌐ S108

YES

RECOGNIZE GESTURE ⌐ S105

S114
NO — IS PROCESSING EXECUTION AMOUNT RECEIVED?

IDENTIFY PROCESSING TO BE EXECUTED BY DISPLAY APPARATUS ⌐ S106

OUTPUT EXECUTION COMMAND OF IDENTIFIED PROCESSING TO DISPLAY APPARATUS ⌐ S107

YES ⌐ S115
REPEAT COMMANDED PROCESSING BASED ON SPECIFIED PROCESSING EXECUTION AMOUNT

START FORM CHANGE MONITORING PROCESSING ⌐ S109

S110
NO — IS FORM OF COMMAND BODY CHANGED?

S118
PROCESSING STOP COMMAND? — NO

YES

OBTAIN THE AMOUNT OF CHANGE (EX. INCLINATION) ⌐ S111

YES

STOP COMMANDED PROCESSING ⌐ S119

DETERMINE PROCESSING EXECUTION AMOUNT ⌐ S112

OUTPUT PROCESSING EXECUTION AMOUNT TO DISPLAY APPARATUS ⌐ S113

S116
NO — GESTURE INPUT COMPLETED?

YES

COMMAND DISPLAY APPARATUS TO STOP PROCESSING ⌐ S117

30

## FIG. 13

θ s=0°

49

TIME POINT T

θ t

48

θ all

ULTIMATE FORM E
θ e=90°

70

## FIG. 14

START FORM S
$\theta s = 0°$

49'

TIME POINT T

$\theta t$

48

# FIG. 15

θ =0°

START FORM S
θ s

49'

49

TIME POINT T

θ t

48

θ all

ULTIMATE FORM E
θ e=90°

70

*FIG. 16*

FIG. 17

FIG. 18

# FIG. 19

*FIG. 20A*

*FIG. 20B*

*FIG. 20C*

EP 2 650 754 A2

## FIG. 21

*FIG. 22*

15/328

FIG. 23

# FIG. 24

**EP 2 650 754 A2**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005352531 A
- JP 2011517357 PCT
- JP 2011517357 A